# EUROPEAN PATENT APPLICATION

(11) **EP 4 224 987 A1**
(43) Date of publication of application: **09.08.2023**
(21) Application number: 20958237.8
(22) Date of filing: 22.10.2020
(51) Int. Cl.: H04W 88/04

(54) **RELAY COMMUNICATION METHOD AND APPARATUS**

(71) Applicant: Huawei Technologies Co., Ltd., Shenzhen, Guangdong 518129 (CN)
(72) Inventor: LI, Xiangyu, Shenzhen, Guangdong 518129 (CN); PENG, Wenjie, Shenzhen, Guangdong 518129 (CN); WANG, Jun, Shenzhen, Guangdong 518129 (CN)
(74) Representative: Maiwald GmbH
(86) International application number: PCT/CN2020/122979
(87) International publication number: WO 2022/082655

(57) **Abstract**

This application provides a UE (User Equipment)-to-UE relay communication method and an apparatus, to ensure normal UE-to-UE relay communication and improve service quality. For example, after an end-to-end unicast connection is established, a hop-by-hop unicast connection and hop-by-hop security between first user equipment and a first relay device, and a hop-by-hop unicast connection and hop-by-hop security between the first relay device and second user equipment are established; and the two hop-by-hop unicast connections corresponding to the hop-by-hop security are separately associated with the end-to-end unicast connection by using first indication information and second indication information, that is, the first indication information and the second indication information indicate that configuration information received through the hop-by-hop unicast connection may be used for the end-to-end unicast connection; the first user equipment, the first relay device, or the second user equipment receives the configuration information, and uses the configuration information for the end-to-end unicast connection; and the first user equipment communicates with the second user equipment through the first relay device. For another example, in an end-to-end unicast connection establishment process, the hop-by-hop security between the first user equipment and the first relay device, and the hop-by-hop security between the first relay device and the second user equipment are established; the first user equipment, the first relay device, or the second user equipment receives the configuration information, and uses the configuration information for the end-to-end unicast connection; and the first user equipment communicates with the second user equipment through the first relay device.

## Description

### TECHNICAL FIELD

This application relates to the communication field, and specifically, to a relay communication method and an apparatus.

### BACKGROUND

Relay communication means that a plurality of devices communicate with each other through a relay device. For example, a network device and user equipment send and receive data or signaling through the relay device. For another example, for terminal-to-terminal (user-to-user, UE-to-UE, U2U), user equipment may send and receive data or signaling through the relay device. How to ensure normal running of terminal-to-terminal relay communication to improve service quality becomes an urgent problem to be resolved.

### SUMMARY

This application provides a U2U relay communication method and an apparatus.

According to a first aspect, this application provides a U2U relay communication method. The method may be performed by a first relay device, or may be performed by another apparatus (for example, a processor, a chip, or a chip system). The another apparatus may be installed in the first relay device or used in coordination with the first relay device. The method includes: The first relay device receives first indication information from first user equipment, where the first indication information indicates the first relay device to receive, through a first unicast connection corresponding to first security, configuration information from the first user equipment, where the configuration information is used for a second unicast connection for communication between the first user equipment and second user equipment through the first relay device; the first relay device receives first configuration information from the first user equipment through the first unicast connection corresponding to the first security; and the first relay device communicates with the first user equipment based on the first configuration information through the second unicast connection.

Alternatively, the method includes: receiving first indication information from first user equipment, where the first indication information indicates that configuration information received through a first unicast connection may be used for a second unicast connection; receiving the configuration information from the first user equipment through the first unicast connection; using the configuration information for the second unicast connection; receiving first data from the first user equipment over an end-to-end link corresponding to the second unicast connection; and forwarding the first data to second user equipment over the link.

According to the method described in the first aspect, because the first indication information associates the hop-by-hop unicast connection with the end-to-end unicast connection, normal U2U relay communication is ensured, and service quality is improved.

In a possible implementation of the first aspect, the first unicast connection is a unicast connection between the first relay device and the first user equipment, and may be referred to as a hop-by-hop unicast connection. The second unicast connection is a unicast connection between the first user equipment and the second user equipment through the first relay device, and may be referred to as an end-to-end unicast connection.

In a possible implementation of the first aspect, the first relay device sends second indication information to the second user equipment, where the second indication information indicates the second user equipment to receive, through a third unicast connection corresponding to third security, second configuration information from the first relay device, where the second configuration information is used for the second unicast connection. For example, the first relay device sends a third unicast connection establishment request message to the second user equipment; or the first relay device sends a third security establishment complete message to the second user equipment, where the second indication information is included in the third unicast connection establishment request message or the third security establishment complete message.

In a possible implementation of the first aspect, the first indication information is in one of the following forms. Optionally, the first indication information may be identification information of the end-to-end unicast connection, for example, a relay identifier (Unique Relay Identifier, RID) of the first relay device, a layer 2 identifier (R1-L2-ID-a or R1-L2-ID-b) of a first user equipment layer 2 (L2 ID) or a second user equipment layer 2 corresponding to the first relay device, a layer 2 identifier of the first user equipment, an application layer identifier of the first user equipment, a layer 2 identifier of the second user equipment, and an application layer identifier of the second user equipment. A source address of a message that carries the end-to-end unicast connection identification information may be the layer 2 identifier of the first user equipment in the end-to-end unicast connection, and a destination address may be the layer 2 identifier of the first user equipment layer 2 corresponding to the first relay device in the end-to-end unicast connection. Optionally, the first indication information may be one piece of bit information, a source address corresponding to a message that carries the bit information is the layer 2 identifier of the first user equipment in the end-to-end unicast connection, and a destination address is the layer 2 identifier of the first user equipment layer 2 corresponding to the first relay device in the end-to-end unicast connection. For example, when the bit information is 1, the first relay device may apply the configuration information received through the hop-by-hop unicast connection to the end-to-end unicast connection; or when the bit information is 0, the first relay device cannot apply the configuration information received through the hop-by-hop unicast connection to the end-to-end unicast connection.

In a possible implementation of the first aspect, the first indication message may be included in a hop-by-hop unicast connection establishment request message from the first user equipment, or in a hop-by-hop security establishment complete process from the first user equipment, or in a PC5-RRC message sent by the first user equipment to the first relay device after the hop-by-hop unicast connection is established, or in a PC5-S message sent by the first user equipment to the first relay device after the hop-by-hop unicast connection is established.

In a possible implementation of the first aspect, a hop-by-hop security establishment step between the first relay device and the first user equipment includes: The first relay device receives the hop-by-hop unicast connection establishment request message from the first user equipment; the first relay device sends a hop-by-hop security establishment command message to the first user equipment; the first relay device receives a hop-by-hop security establishment complete message from the first user equipment; and the first relay device sends a hop-by-hop unicast connection establishment accept message to the first user equipment.

In a possible implementation of the first aspect, the first relay device further receives second indication information from the first user equipment, where the second indication information indicates whether the configuration information is used for end-to-end unicast connection. For example, the second indication information may be 1-bit indication information. When the indication information is 1, it indicates that corresponding configuration information needs to be applied to a corresponding end-to-end unicast connection. When the indication information is 0, it indicates that corresponding configuration information does not need to be applied to a corresponding end-to-end unicast connection. The second indication information is optional.

In a possible implementation of the first aspect, the first relay device itself determines whether to use the configuration information for the end-to-end unicast connection.

In a possible implementation of the first aspect, configuration information includes a bearer configuration and/or a configuration. Specifically, the bearer configuration may be an RLC bearer configuration. The RLC bearer configuration includes an RLC configuration and a logical channel (Logic Channel, LCH) configuration, and may include at least one of the following: a parameter related only to sending, and a parameter related to both sending and receiving.
① Parameter related only to sending (including one or more of the following parameters):
   - the RLC configuration includes: polling retransmission control timer duration T-PollRetransmit, polling triggering control parameters pollPDU and pollByte, and a maximum allowed quantity of times of automatic repeat request (automatic repeat request, ARQ) retransmission in RLC AM mode; and
   - the LCH configuration includes: a priority of the LCH, a related parameter that controls the execution of LCP (Logical Channel Prioritization) (such as a logical channel priority, a prioritized bit rate (Prioritized Bit Rate, PBR), bucket size duration (Bucket Size Duration, BSD), or an indication indicating whether to allow use of configured grant type1), whether to enable hybrid automatic repeat request (Hybrid automatic repeat request, HARQ) feedback, an SR resource associated with the LCH, a logical channel group (Logical Channel Group, LCG) to which the LCH belongs, and the like.
② Parameter related to both sending and receiving (including one or more of the following parameters):
   - the RLC configuration includes an RLC mode and an RLC SN length; and
   - the LCH configuration includes a logical channel identifier (Logical Channel ID, LCID).

Specifically, a measurement configuration may be a sidelink measurement configuration. For example, the measurement configuration includes a measurement object, a measurement report configuration, a measurement identifier, and the like. It may be understood that the measurement configuration is used to measure a corresponding unicast connection.

In a possible implementation of the first aspect, the first relay device may trigger the hop-by-hop unicast connection to the first user equipment, that is, the first user equipment receives the first indication information from the first relay device, where the first indication information indicates that the configuration information received through the hop-by-hop unicast connection may be used for the end-to-end unicast connection; the first user equipment receives the configuration information sent by the first relay device through the hop-by-hop unicast connection; and the first user equipment uses the configuration information for the end-to-end unicast connection.

In a possible implementation of the first aspect, a quantity of first relay devices is not limited, and there may be one or more first relay devices. In other words, the first relay devices may be used in a multi-hop scenario. The first relay device may be a terminal device, or may be a network device.

According to a second aspect, this application provides a U2U relay communication method. The method may be performed by first user equipment, or may be performed by another apparatus (for example, a processor, a chip, or a chip system). The another apparatus may be installed in the first user equipment or used in coordination with the first user equipment. The method includes: The first user equipment sends first indication information to a first relay device, where the first indication information indicates the first relay device to receive, through a first unicast connection corresponding to first security, configuration information from the first user equipment, where the configuration information is used for a second unicast connection for communication between the first user equipment and second user equipment through the first relay device; the first user equipment sends the first configuration information to the first relay device through the first unicast connection corresponding to the first security; and the first user equipment communicates with the first relay device based on the first configuration information through the second unicast connection.

Alternatively, the method includes: sending first indication information to a first relay device, where the first indication information indicates that configuration information sent through a hop-by-hop unicast connection may be used for an end-to-end unicast connection; sending the configuration information to the first relay device through the hop-by-hop unicast connection, where the configuration information may be used by the first relay device for the end-to-end unicast connection; and sending first data to the first relay device, where the first data may be forwarded by the first relay device to second user equipment.

For a specific method, refer to corresponding descriptions in the first aspect. Details are not described herein again.

According to a third aspect, this application provides a U2U relay communication method. The method may be performed by a first relay device, or may be performed by another apparatus (for example, a processor, a chip, or a chip system). The another apparatus may be installed in the first relay device or used in coordination with the first relay device. The method includes: sending first indication information to second user equipment, where the first indication information indicates that configuration information sent through a hop-by-hop unicast connection may be used for an end-to-end unicast connection; sending the configuration information to the second user equipment through the hop-by-hop unicast connection, where the configuration information may be used for the end-to-end unicast connection; receiving first data from first user equipment; and forwarding the first data to the second user equipment.

For details, refer to content in the first aspect. Content related to the first relay device in the third aspect corresponds to content related to the first user equipment in the first aspect, and content related to the second user equipment in the third aspect corresponds to content related to the first relay device in the first aspect.

According to a fourth aspect, this application provides a U2U relay communication method. The method may be performed by second user equipment, or may be performed by another apparatus (for example, a processor, a chip, or a chip system). The another apparatus may be installed in the second user equipment or used in coordination with the second user equipment. The method includes: receiving first indication information sent by a first relay device, where the first indication information indicates that configuration information sent through a hop-by-hop unicast connection may be used for an end-to-end unicast connection; receiving the configuration information from the first relay device, where the configuration information may be used by the first relay device for the end-to-end unicast connection; using the received configuration information for the end-to-end unicast connection; and receiving first data from the first relay device.

According to a fifth aspect, this application provides a U2U relay communication method. The method may be performed by a first relay device, or may be performed by another apparatus (for example, a processor, a chip, or a chip system). The another apparatus may be installed in the first relay device or used in coordination with the first relay device. The method includes: A first relay device receives a first security establishment command message from first user equipment; the first relay device sends a first security establishment complete message to the first user equipment; the first relay device receives first configuration information from the first user equipment through a first unicast connection corresponding to first security; and the first relay device communicates with the first user equipment based on the first configuration information through a second unicast connection, where the second unicast connection is used for communication between the first user equipment and second user equipment through the first relay device.

Alternatively, the method includes: receiving a hop-by-hop security establishment command message from first user equipment; sending a hop-by-hop security establishment complete message to the first user equipment; receiving configuration information from the first user equipment; using the configuration information for an end-to-end unicast connection; receiving first data from the first user equipment; and forwarding the first data to second user equipment.

In a possible implementation of the fifth aspect, a condition for triggering hop-by-hop security establishment is one of the following: The first relay device forwards an end-to-end security establishment command message from the second user equipment to the first user equipment; the first relay device receives an end-to-end security establishment complete message from the first user equipment; and the first relay device forwards an end-to-end unicast connection establishment accept message from the second user equipment to the first user equipment.

In a possible implementation of the fifth aspect, the configuration information includes a bearer configuration and/or a configuration. For details, refer to content about the configuration information in the first aspect.

In a possible implementation of the fifth aspect, the first relay device establishes third security between the first relay device and the second user equipment.

In a possible implementation of the fifth aspect, the first relay device sends the second configuration information to the second user equipment through the third security, where the second configuration information is used for the second unicast connection.

In a possible implementation of the fifth aspect, the first relay device further receives second indication information from the first user equipment, and the second indication information indicates that the configuration information is used for the end-to-end unicast connection. For example, if the second indication information is 1-bit information, when the second indication information is 1, the second indication information indicates that the configuration information needs to be applied to the end-to-end unicast connection; when the second indication information is 0, the second indication information indicates that the configuration information does not need to be applied to the end-to-end unicast connection.

According to the foregoing implementation, the configuration information received through a hop-by-hop unicast connection may be used for the corresponding end-to-end unicast connection, and this helps ensure normal U2U relay communication and improve service quality.

In a possible implementation of the fifth aspect, the first relay device may trigger hop-by-hop security establishment with the first user equipment. To be specific, the first user equipment receives the hop-by-hop security establishment command message from the first relay device; the first user equipment sends the hop-by-hop security establishment complete message to the first relay device; and the first user equipment receives the configuration information from the first relay device.

In a possible implementation of the fifth aspect, a quantity of first relay devices is not limited, and there may be one or more first relay devices. In other words, the first relay devices may be used in a multi-hop scenario. The first device may be a terminal device, or may be a network device.

According to a sixth aspect, this application provides a U2U relay communication method. The method may be performed by first user equipment, or may be performed by another apparatus (for example, a processor, a chip, or a chip system). The another apparatus may be installed in the first user equipment or used in coordination with the first user equipment. The method includes: The first user equipment sends a first security establishment command message to a first relay device; the first user equipment receives a first security establishment complete message from the first relay device; the first user equipment sends first configuration information to the first relay device through a first unicast connection corresponding to first security; and the first user equipment communicates with the first relay device based on the first configuration information through a second unicast connection, where the second unicast connection is used for communication between the first user equipment and second user equipment through the first relay device.

Alternatively, the method includes: sending a hop-by-hop security establishment command message to a first relay device; receiving a hop-by-hop security establishment complete message from the first relay device; sending configuration information to the first relay device, where the configuration information may be used by the first relay device for an end-to-end unicast connection; and sending first data to the first relay device, where the first data may be forwarded by the first relay device to second user equipment.

For the hop-by-hop security establishment method and the configuration information sending method, refer to the method described in the fifth aspect. Details are not described herein again.

According to a seventh aspect, this application provides a U2U relay communication method. The method may be performed by a first relay device, or may be performed by another apparatus (for example, a processor, a chip, or a chip system). The another apparatus may be installed in the first relay device or used in coordination with the first relay device. The method includes: sending a hop-by-hop security establishment command message to second user equipment; receiving a hop-by-hop security establishment complete message from the second user equipment; sending configuration information to the second user equipment, where the configuration information may be used by the second user equipment for an end-to-end unicast connection; receiving first data sent by first user equipment; and forwarding the first data to the second user equipment.

For details, refer to content in the fifth aspect. Content related to the first relay device in the seventh aspect is corresponding to content related to the first user equipment in the fifth aspect, and content related to the second user equipment in the seventh aspect is corresponding to content related to the first relay device in the fifth aspect.

In a possible implementation of the seventh aspect, the second user equipment may trigger a hop-by-hop unicast connection to the first relay device. To be specific, the first relay device receives the hop-by-hop security establishment command message from the second user equipment; the first relay device sends the hop-by-hop security establishment complete message; the first relay device receives the configuration information from the second user equipment; and the first relay device uses the configuration information for the end-to-end unicast connection.

According to an eighth aspect, this application provides a U2U relay communication method. The method may be performed by second user equipment, or may be performed by another apparatus (for example, a processor, a chip, or a chip system). The another apparatus may be installed in the second user equipment or used in coordination with the second user equipment. The method includes: receiving a hop-by-hop security establishment command message sent by a first relay device; sending a hop-by-hop security establishment complete message to the first relay device; receiving configuration information sent by the first relay device, where the configuration information may be used by the second user equipment for an end-to-end unicast connection; and using the configuration information for the end-to-end unicast connection.

According to a ninth aspect, an apparatus is provided. The apparatus may be a first relay device, may be an apparatus in the first relay device, or may be an apparatus that can be used in coordination with the first relay device. In a design, the apparatus may include modules that are in a one-to-one correspondence with the methods/operations/steps/actions described in the first aspect or the third aspect. The modules may be hardware circuits or software, or may be implemented by a combination of the hardware circuits and the software.

In a design, the apparatus may include a receiving unit, a sending unit, and a processing unit. The receiving unit is configured to receive first indication information, configuration information, and first data from first user equipment, where the first indication information indicates that the configuration information received through a hop-by-hop unicast connection may be used for an end-to-end unicast connection. The processing unit is configured to use the configuration information for the end-to-end unicast connection. The sending unit is configured to send the first indication information, the configuration information, and the first data to second user equipment.

For a method for receiving the first indication information, the configuration information, and the first data from the first user equipment, and a method for using the configuration information for the end-to-end unicast connection, refer to corresponding descriptions in the first aspect. Details are not described herein again.

For a method for sending the first indication information, the configuration information and the first data to the second user equipment, refer to corresponding descriptions in the third aspect. Details are not described herein again.

According to a tenth aspect, an apparatus is provided. The apparatus may be first user equipment, may be an apparatus in the first user equipment, or may be an apparatus that can be used in coordination with the first user equipment. In a design, the apparatus may include modules that are in one-to-one correspondence with the methods/operations/steps/actions described in the second aspect. The modules may be hardware circuits or software, or may be implemented by a combination of the hardware circuits and the software.

In a design, the apparatus may include a sending unit, configured to send first indication information, configuration information, and first data to a first relay device. The first indication information indicates that the configuration information sent through a hop-by-hop unicast connection may be used for an end-to-end unicast connection.

For a method for sending the first indication information, the configuration information, and the first data to the first relay device, refer to corresponding descriptions in the second aspect. Details are not described herein again.

According to an eleventh aspect, an apparatus is provided. The apparatus may be second user equipment, may be an apparatus in the second user equipment, or may be an apparatus that can be used in coordination with the second user equipment. In a design, the apparatus may include modules that are in one-to-one correspondence with the methods/operations/steps/actions described in the fourth aspect. The modules may be hardware circuits or software, or may be implemented by a combination of the hardware circuits and the software.

In a design, the apparatus may include a receiving unit, configured to receive first indication information, configuration information, and first data from a first relay device. The first indication information indicates that the configuration information sent through a hop-by-hop unicast connection may be used for an end-to-end unicast connection; and a processing unit is configured to use the configuration information for the end-to-end unicast connection.

For a method for receiving the first indication information, the configuration information, and the first data from the first relay device, refer to corresponding descriptions in the fourth aspect. Details are not described herein again.

According to a twelfth aspect, an apparatus is provided. The apparatus may be a first relay device, may be an apparatus in the first relay device, or may be an apparatus that can be used in coordination with the first relay device. In a design, the apparatus may include modules that are in one-to-one correspondence with the methods/operations/steps/actions described in the fifth aspect or the seventh aspect. The modules may be hardware circuits or software, or may be implemented by a combination of the hardware circuits and the software.

In a design, the apparatus may include a receiving unit, a sending unit, and a processing unit. The receiving unit is configured to receive a hop-by-hop security establishment command message and configuration information from first user equipment. The processing unit is configured to use the configuration information for an end-to-end unicast connection. The sending unit is configured to send the hop-by-hop security establishment command message and the configuration information to second user equipment.

For a method for receiving the hop-by-hop security establishment command message and the configuration information from the first user equipment and a method for using the configuration information for the end-to-end unicast connection, refer to corresponding descriptions in the fifth aspect. Details are not described herein again.

For a method for sending the hop-by-hop security establishment command message and the configuration information to the second user equipment, refer to corresponding descriptions in the fifth aspect. Details are not described herein again.

According to a thirteenth aspect, an apparatus is provided. The apparatus may be first user equipment, may be an apparatus in the first user equipment, or may be an apparatus that can be used in coordination with the first user equipment. In a design, the apparatus may include modules that are in a one-to-one correspondence with the methods/operations/steps/actions described in the sixth aspect. The modules may be implemented by a hardware circuit, software, or a combination of a hardware circuit and software.

In a design, the apparatus may include a sending unit, configured to send a hop-by-hop security establishment complete message, configuration information, and first data to a first relay device. First indication information indicates that the configuration information sent through a hop-by-hop unicast connection may be used for an end-to-end unicast connection. The sending unit is configured to send a hop-by-hop security establishment complete message to the first relay device. The processing unit is configured to use the configuration information for the end-to-end unicast connection.

For a specific method, refer to corresponding descriptions in the sixth aspect. Details are not described herein again.

According to a fourteenth aspect, an apparatus is provided. The apparatus may be second user equipment, may be an apparatus in the second user equipment, or may be an apparatus that can be used in coordination with the second user equipment. In a design, the apparatus may include modules that are in one-to-one correspondence with the methods/operations/steps/actions described in the eighth aspect. The modules may be hardware circuits or software, or may be implemented by a combination of the hardware circuits and the software.

In a design, the apparatus may include a receiving unit, configured to receive a hop-by-hop security establishment command message, configuration information, and first data that are from a first relay device; a sending unit, configured to send a hop-by-hop security establishment complete message to the first relay device; and a processing unit, configured to use the configuration information for an end-to-end unicast connection.

For a specific method, refer to corresponding descriptions in the eighth aspect. Details are not described herein again.

According to a fifteenth aspect, an embodiment of this application provides an apparatus. The apparatus includes a processor, configured to implement the method described in the first aspect or the third aspect. The apparatus may further include a memory, configured to store instructions and data. The memory is coupled to the processor, and when executing the instructions stored in the memory, the processor can implement the method described in the first aspect or the fourth aspect. The apparatus may further include a communication interface. The communication interface is used by the apparatus to communicate with another device. For example, the communication interface may be a transceiver, a circuit, a bus, a module, or another type of communication interface. The another device may be first user equipment, second user equipment, or the like. In a possible device, the apparatus includes:
a processor, configured to use a communication interface: to receive first indication information, configuration information, and first data from first user equipment, where the first indication information indicates that the configuration information received through a hop-by-hop unicast connection may be used for an end-to-end unicast connection; or send the first indication information, the configuration information, and the first data to second user equipment, where the first indication information indicates that the configuration information received through the hop-by-hop unicast connection may be used for the end-to-end unicast connection by the second user equipment.

For a method for receiving the first indication information from the first user equipment, the configuration information, and the first data, refer to corresponding descriptions in the first aspect. Details are not described herein again.

For a method for sending the first indication information, the configuration information and the first data to the second user equipment, refer to corresponding descriptions in the third aspect. Details are not described herein again.

According to a sixteenth aspect, an embodiment of this application provides an apparatus. The apparatus includes a processor, configured to implement the method described in the second aspect. The apparatus may further include a memory, configured to store instructions and data. The memory is coupled to the processor, and when executing the instructions stored in the memory, the processor can implement the method described in the second aspect. The apparatus may further include a communication interface. The communication interface is used by the apparatus to communicate with another device. For example, the communication interface may be a transceiver, a circuit, a bus, a module, or another type of communication interface. The another device may be a first relay device. In a possible device, the apparatus includes:
a processor, configured to use a communication interface: to send first indication information and configuration information to the first relay device. For a method for sending the first indication information and the configuration information to the first relay device, refer to corresponding descriptions in the second aspect. Details are not described herein again.

According to a seventeenth aspect, an embodiment of this application provides an apparatus. The apparatus includes a processor, configured to implement the method described in the third aspect or the sixth aspect. The apparatus may further include a memory, configured to store instructions and data. The memory is coupled to the processor, and when executing the instructions stored in the memory, the processor can implement the method described in the third aspect or the sixth aspect. The apparatus may further include a communication interface. The communication interface is used by the apparatus to communicate with another device. For example, the communication interface may be a transceiver, a circuit, a bus, a module, or another type of communication interface. The another device may be a first relay device. In a possible device, the apparatus includes:
a processor, configured to use the communication interface: to receive first indication information, configuration information, and first data from the first relay device. For a specific method, refer to corresponding descriptions in the fourth aspect. Details are not described herein again.

According to an eighteenth aspect, an embodiment of this application provides an apparatus. The apparatus includes a processor, configured to implement the method described in the fifth aspect or the seventh aspect. The apparatus may further include a memory, configured to store instructions and data. The memory is coupled to the processor, and when executing the instructions stored in the memory, the processor can implement the method described in the fifth aspect or the seventh aspect. The apparatus may further include a communication interface. The communication interface is used by the apparatus to communicate with another device. For example, the communication interface may be a transceiver, a circuit, a bus, a module, or another type of communication interface. The another device may be first user equipment or second user equipment. In a possible device, the apparatus includes:
a processor, configured to use the communication interface: to receive a hop-by-hop security establishment command message, configuration information, and first data from the first user equipment; send a hop-by-hop security establishment complete message to the first user equipment; or send first indication information, the configuration information, and the first data to second user equipment; and receive a hop-by-hop security establishment complete message of the second user equipment.

For a method for receiving the hop-by-hop security establishment command message, the configuration information, and the first data from the first user equipment and a method for sending the hop-by-hop security complete message to the first user equipment, refer to corresponding descriptions in the fifth aspect. Details are not described herein again.

For a method for sending the hop-by-hop security establishment command message to the second user equipment, the configuration information, and the first data, and a method for receiving hop-by-hop security establishment complete message of the second user equipment, refer to corresponding descriptions in the seventh aspect. Details are not described herein again.

According to a nineteenth aspect, an embodiment of this application provides an apparatus. The apparatus includes a processor, configured to implement the method described in the sixth aspect. The apparatus may further include a memory, configured to store instructions and data. The memory is coupled to the processor, and when executing the instructions stored in the memory, the processor can implement the method described in the sixth aspect. The apparatus may further include a communication interface. The communication interface is used by the apparatus to communicate with another device. For example, the communication interface may be a transceiver, a circuit, a bus, a module, or another type of communication interface. The another device may be a first relay device. In a possible device, the apparatus includes:
a processor, configured to use the communication interface: to send a hop-by-hop security establishment command message, configuration information, and first data to the first relay device; and receive a hop-by-hop security establishment complete message from the first relay device. For a specific method, refer to corresponding descriptions in the sixth aspect. Details are not described herein again.

According to a twentieth aspect, an embodiment of this application provides an apparatus. The apparatus includes a processor, configured to implement the method described in the eighth aspect. The apparatus may further include a memory, configured to store instructions and data. The memory is coupled to the processor, and when executing the instructions stored in the memory, the processor can implement the method described in the eighth aspect. The apparatus may further include a communication interface. The communication interface is used by the apparatus to communicate with another device. For example, the communication interface may be a transceiver, a circuit, a bus, a module, or another type of communication interface. The another device may be a first relay device. In a possible device, the apparatus includes:
a processor, configured to use the communication interface: to receive a hop-by-hop security establishment command, configuration information, and first data from the first relay device; and send a hop-by-hop security establishment complete message to the first relay device. For a specific method, refer to corresponding descriptions in the eighth aspect. Details are not described herein again.

According to a twenty-first aspect, an embodiment of this application provides a computer-readable storage medium, where the computer-readable storage medium stores a computer program or instructions, and when the computer program or instructions are executed, the computer is enabled to perform the method according to the first aspect, the second aspect, the third aspect, the fourth aspect, the fifth aspect, the sixth aspect, the seventh aspect, the eighth aspect, any possible design of the first aspect, any possible design of the second aspect, any possible design of the third aspect, any possible design of the fourth aspect, any possible design of the fifth aspect, any possible design of the sixth aspect, any possible design of the seventh aspect, or any possible design of the eighth aspect.

According to a twenty-second aspect, an embodiment of this application provides a computer program product, including computer program code or instructions, where when the computer program code or the instructions are run on a computer, the computer is enabled to perform the method according to any one of the first aspect, the second aspect, the third aspect, the fourth aspect, the fifth aspect, the sixth aspect, the seventh aspect, the eighth aspect, any possible design of the first aspect, any possible design of the second aspect, any possible design of the third aspect, any possible design of the fourth aspect, any possible design of the fifth aspect, any possible design of the sixth aspect, any possible design of the seventh aspect, or any possible design of the eighth aspect.

According to a twenty-third aspect, an embodiment of this application provides a chip, including: a processor, where the processor is coupled to a memory; and the processor is configured to implement the method according to the first aspect, the second aspect, the third aspect, the fourth aspect, the fifth aspect, the sixth aspect, the seventh aspect, the eighth aspect, any possible design of the first aspect, any possible design of the second aspect, any possible design of the third aspect, any possible design of the fourth aspect, any possible design of the fifth aspect, any possible design of the sixth aspect, any possible design of the seventh aspect, or any possible design of the eighth aspect.

According to a twenty-fourth aspect, an embodiment of this application provides a system, including the apparatus according to the ninth aspect, the apparatus according to the tenth aspect, the apparatus according to the eleventh aspect, and the apparatus according to the twelfth aspect.

According to a twenty-fifth aspect, an embodiment of this application provides a system, including the apparatus according to the thirteenth aspect, the apparatus according to the fourteenth aspect, the apparatus according to the fifteenth aspect, and the apparatus according to the twelfth aspect.

### BRIEF DESCRIPTION OF DRAWINGS

FIG. 1a and FIG. 1b each are a schematic diagram of an architecture of a communication system to which an embodiment of this application is applied;
FIG. 2 is a flowchart of establishing an end-to-end unicast connection;
FIG. 3 is a flowchart of establishing an end-to-end unicast connection in a multi-hop scenario;
FIG. 4 to FIG. 7 each are a flowchart of establishing a hop-by-hop unicast connection;
FIG. 8 to FIG. 13A and FIG. 13B are flowcharts of establishing hop-by-hop security; and
FIG. 14 and FIG. 15 each are a schematic diagram of a structure of a possible communication apparatus according to an embodiment of this application.

### DESCRIPTION OF EMBODIMENTS

Technical solutions provided in embodiments of this application may be applied to various communication systems, for example, a long term evolution (long term evolution, LTE) system, a 5th generation (5th generation, 5G) mobile communication system, a Wi-Fi system, a future communication system, a system integrating a plurality of communication systems, or the like. This is not limited in embodiments of this application. 5G may also be referred to as new radio (new radio, NR).

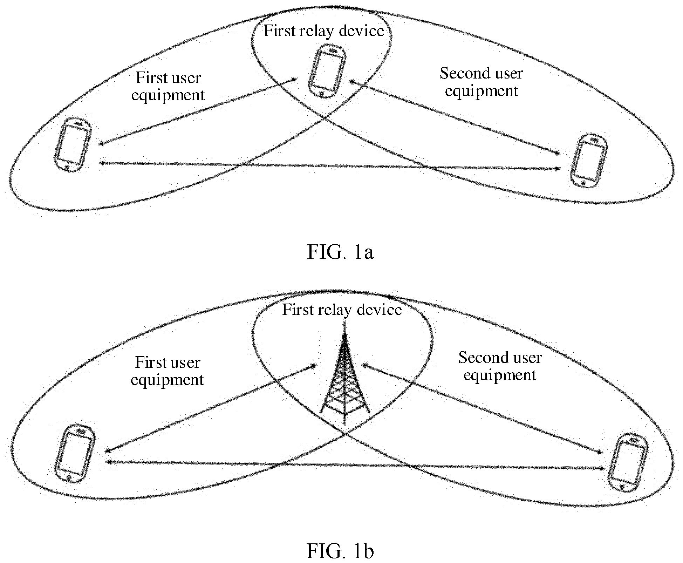

Embodiments of this application are applicable to a UE (User Equipment)-to-UE relay (U2U relay) communication scenario, as shown in FIG. 1a and FIG. 1b. A relay device in FIG. 1a is a terminal device, and a relay device in FIG. 1b is a network device. First user equipment communicates with second user equipment through one or more first relay devices. The first user equipment and the second user equipment may transmit data and signaling through the first relay device.

In embodiments of this application, the first user equipment may also be referred to as source user equipment, initiating user equipment, or sending user equipment. In embodiments of this application, the second user equipment may also be referred to as target user equipment, peer user equipment, or receiving user equipment. In embodiments of this application, the first relay device may be user equipment or a network device. A quantity of relay devices is not limited, and the relay devices may be sequentially referred to as a first relay device, a second relay device, and the like. When there are a plurality of relay devices, the communication may also be referred to as relay communication in a multi-hop scenario.

The user equipment (User Equipment, UE) in embodiments of this application may also be referred to as a terminal, a terminal device, a mobile station, a mobile terminal, or the like. The user equipment may be a mobile phone, a tablet computer, a computer with a wireless transceiver function, a virtual reality terminal device, an augmented reality terminal device, a wireless terminal in industrial control, a wireless terminal in self-driving, a wireless terminal in remote surgery, a wireless terminal in a smart grid, a wireless terminal in transportation security, a wireless terminal in a smart city, a wireless terminal in a smart home, or the like. A specific device form of the user equipment is not limited in embodiments of this application. In embodiments of this application, an apparatus configured to implement a function of the user equipment may be user equipment, or may be an apparatus, for example, a chip system, that can support the user equipment in implementing the function. The apparatus may be installed in the user equipment, or may be used in coordination with the user equipment. In embodiments of this application, a chip system may include a chip, or may include a chip and another discrete component. In the technical solutions provided in embodiments of this application, the technical solutions provided in embodiments of this application are described by using an example in which the apparatus configured to implement the function of the user equipment is the user equipment.

The network device in embodiments of this application includes a base station (base station, BS), and may be a device deployed in a radio access network for wireless communication with a terminal device. The base station may be in a plurality of forms, for example, a macro base station, a micro base station, a relay station, an access point, and the like. The base station in embodiments of this application may be a base station in a 5G system or a base station in an LTE system. The base station in the 5G system may also be referred to as a transmission reception point (transmission reception point, TRP) or a next generation NodeB (generation NodeB, gNB, or gNodeB). In embodiments of this application, an apparatus configured to implement a function of the network device may be a network device, or may be an apparatus, for example, a chip system, that can support the network device in implementing the function. The apparatus may be installed in the network device, or may be used in coordination with the network device. In the technical solutions provided in embodiments of this application, the technical solutions provided in embodiments of this application are described by using an example in which the apparatus configured to implement the function of the network device is the network device.

In embodiments of this application, the first user equipment, the second user equipment, and the first relay device (when the first relay device is user equipment) may be in a radio resource control connected (RRC_CONNECTED) mode, a radio resource idle (RRC _IDLE) mode, a radio resource inactive (RRC_INACTIVE) mode, or an out of coverage (Out of Coverage, OOC) mode. The OOC mode means that the device is outside coverage of the network device.

A protocol stack of a base station or a terminal in U2U relay communication is described in detail below. Using the first user equipment as an example, a control plane protocol stack of the first user equipment may include: a radio resource control (radio resource control, RRC) layer, a packet data convergence protocol (packet data convergence protocol, PDCP) layer, a radio link control (radio link control, RLC) layer, a media access control (medium access control, MAC) layer, and a physical (physic, PHY) layer. The RRC layer may also be referred to as a layer 3 (Layer 3, L3), the PDCP layer, the RLC layer, and the MAC layer may be collectively referred to as a layer 2 (Layer 2, L2), and the PHY layer may be referred to as a layer 1 (Layer 1, L1). A user plane protocol layer of the first user equipment may include a PDCP layer, an RLC layer, a MAC layer, and a physic layer. In a possible implementation, a service data adaptation protocol (service data adaptation protocol, SDAP) layer may be included between the RRC layer and the PDCP layer. An internet protocol (internet protocol, IP) layer may be further included above the SDAP layer.

During implementation of this application, a layer 2 (Layer 2, L2)-based relay manner may be used, or a layer 3 (Layer 3, L3)-based relay manner may be used. Specifically, in the L2-based relay manner, user plane data may be relayed and forwarded below the PDCP layer. To be specific, the first relay device needs to parse a data packet sent by the first user equipment to the second user equipment to the RLC layer or an adaptation layer, re-assemble the data packet, and then forward the data packet to the second user equipment. The adaptation layer may exist between the RLC layer and the PDCP layer. Specifically, in the L3-based relay manner, the user plane data may be relayed and forwarded at an IP layer. To be specific, the first relay device needs to parse a data packet sent by the first user equipment to the second user equipment to the IP layer, and forward the data packet to the second user equipment based on information such as an IP address.

U2U communication supports three communication modes: broadcast, multicast, and unicast. In the broadcast communication mode, broadcast data sent by sending user equipment may be received by any interested receiving user equipment. In the multicast communication mode, one user equipment may send multicast data to another user equipment in a same communication group. In the unicast communication mode, two user equipment need to first establish a unicast connection. After the unicast connection is established, the sending user equipment may send unicast data to receiving user equipment, and only the receiving user equipment can receive the data. Embodiments of this application are applicable to the unicast communication mode. Specifically, the first user equipment establishes the unicast connection to the second user equipment through the first relay device. A unicast connection between the first user equipment and the first relay device is a first unicast connection, and may also be referred to as a hop-by-hop unicast connection. A unicast connection between the first user equipment and the second user equipment through the first relay device is a second unicast connection, and is also referred to as an end-to-end unicast connection. A unicast connection between the first relay device and the second user equipment is a third unicast connection, and may also be referred to as a hop-by-hop unicast connection. For example, the second unicast connection is used for communication between the first user equipment and the second user equipment through the relay device. Alternatively, to implement UE-to-UE relay communication, there are second unicast connections between the first user equipment and the relay device, and between the second user equipment and the relay device. In the embodiments, the unicast connection may be a PCS-S connection and/or a PC5-RRC connection.

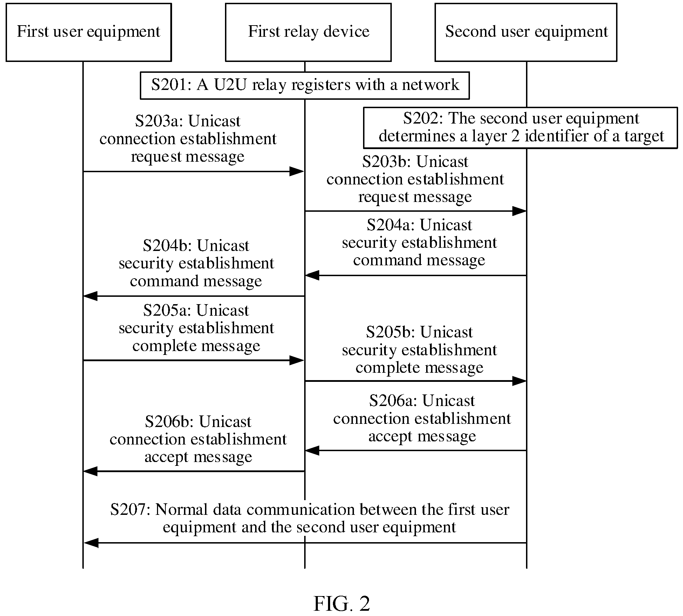

As shown in FIG. 2, in a possible implementation, in a process in which first user equipment and second user equipment establish an end-to-end unicast connection through a first relay device, corresponding end-to-end security is also established, and the first user equipment and the second user equipment send and receive data through the first relay device based on the established end-to-end security. Specifically, after the end-to-end unicast connection is established, a source address of a data packet sent by a first user equipment to the first relay device is a first user equipment L2 ID, and a destination address of the data packet is R-L2-ID-b. A source address of a data packet forwarded by the first relay device to the second user equipment is R-L2-ID-a, and a destination address of the data packet is a second user equipment L2 ID. A source address of a data packet sent by the second user equipment to the first relay device is the second user equipment L2 ID, and a destination address of the data packet is R-L2-ID-a. A source address of a data packet forwarded by the first relay device to the first user equipment is R-L2-ID-b, and a destination address of the data packet is the first user equipment L2 ID.

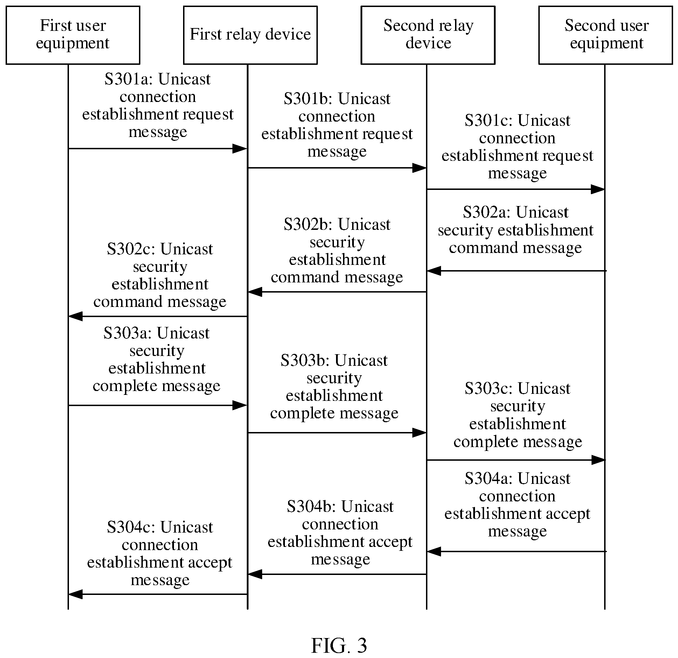

In a possible implementation, as shown in FIG. 3, first user equipment and second user equipment establish an end-to-end unicast connection through a plurality of relay devices, and corresponding end-to-end security is established. The first user equipment and the second user equipment send and receive data through the plurality of relay devices based on the established end-to-end security. That is, the end-to-end unicast connection and security are established in the multi-hop scenario. For example, the first user equipment and the second user equipment establish an end-to-end unicast connection through the first relay device and a second relay device, and the corresponding end-to-end security is established. R1-L2-ID-a is associated with the first relay device and a first user equipment layer 2 ID, and is used to forward a message from the first user equipment. R1-L2-ID-b is associated with the first relay device and a second user equipment layer 2 ID, and is used to forward a message from the second relay device. R2-L2-ID-a is associated with the second relay device and the first user equipment layer 2 ID, and is used to forward a message of the first relay device. R2-L2-ID-b is associated with the second relay device and the second user equipment layer 2 ID, and is used to forward a message of the second user equipment.

However, in the foregoing implementation, the hop-by-hop unicast connection or the hop-by-hop unicast security and the end-to-end unicast connection cannot be implemented. Consequently, quality of relay-device-based communication between user equipment cannot be ensured.

To resolve the foregoing technical problem, an embodiment of this application provides a delay communication method. For example, to implement an end-to-end unicast connection, that is, in a scenario in which first user equipment and second user equipment communicate based on a relay device, configuration information sent through a hop-by-hop unicast connection may be used for the end-to-end unicast connection, to ensure UE-to-UE relay communication quality.

In this embodiment of this application, security between the first user equipment and a first relay device may be referred to as first security, and a corresponding unicast connection is a first unicast connection. Security between the first user equipment and the second user equipment is referred to as second security, and a corresponding unicast connection is a second unicast connection. Security between the second user equipment and the first relay device is referred to as third security, and a corresponding unicast connection is a third unicast connection.

The following describes in detail the technical solutions in embodiments of this application with reference to the accompanying drawings.

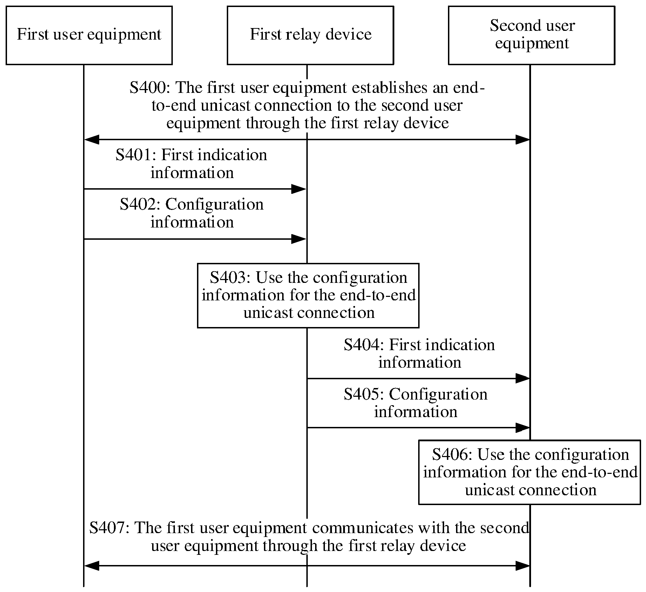

An embodiment of this application provides a relay communication method. As shown in FIG. 4, the procedure includes steps S400, S401, S402, S403, S404, S405, S406 and S407.

S400: First user equipment establishes a UE-to-UE (U2U) relay end-to-end unicast connection to second user equipment through a first relay device, and completes corresponding end-to-end security establishment.

In the embodiment of this application, this step is optional. Specifically, as shown in FIG. 2, the following procedure is included: The first user equipment sends an end-to-end unicast connection establishment request message to the first relay device; the first relay device forwards, to second user equipment, the end-to-end unicast connection establishment request message sent by the first user equipment; the second user equipment sends an end-to-end security establishment command message to the first relay device; the first relay device forwards, to the first user equipment, the end-to-end security establishment command message received from the second user equipment; the first user equipment sends an end-to-end security establishment complete message to the first relay device; the first relay device forwards, to the second user equipment, the end-to-end security establishment complete message sent by the first user equipment; the second user equipment sends an end-to-end unicast connection establishment accept message to the first relay device; and the first relay device forwards, to the first user equipment, the end-to-end unicast connection accept message sent by the second user equipment.

S401: The first user equipment sends first indication information to the first relay device.

In this embodiment of this application, the first indication information indicates that the first relay device may use configuration information received through a hop-by-hop unicast connection, between the first user equipment and the first relay device or between the first relay device and the second user equipment of an end-to-end unicast connection.

Optionally, the first indication information may be identification information of the end-to-end unicast connection. The identification information may be at least one of the following: a unique relay identifier (unique relay identifier, RID) of the first relay device, a first user equipment L2 ID, an application layer identifier of the first user equipment, a first relay device L2 ID (R-L2-ID-a and/or R-L2-ID-b), a second user equipment L2 ID, and an application layer identifier of the second user equipment. It may be understood that, when the first relay device receives the identification information, the first relay device may use the configuration information received through the hop-by-hop unicast connection, between the first user equipment and the first relay device of the end-to-end unicast connection.

Optionally, the first indication information may be bit information. It may be understood that a message carrying the bit information is a message corresponding to the first unicast connection (for example, a PC5-RRC message or a PC5-S message corresponding to the first unicast connection). For example, when the bit information is 1, the first relay device uses the configuration information received through the hop-by-hop unicast connection, between the first user equipment and the first relay device or between the first relay device and the second user equipment of the end-to-end unicast connection.

In this embodiment of this application, the first user equipment sends a first indication message to the first relay device through the established hop-by-hop unicast connection. The step of establishing the hop-by-hop unicast connection between the first user equipment and the first relay device is as follows:

The first user equipment sends the hop-by-hop unicast connection establishment request message to the first relay device;
the first relay device sends the hop-by-hop security establishment command message to the first user equipment;
the first user equipment sends the hop-by-hop security establishment complete message to the first relay device; and
the first relay device sends the hop-by-hop unicast connection establishment accept message to the first user equipment.

Optionally, before first security is established, the hop-by-hop unicast connection establishment request message sent by the first user equipment to the first relay device includes the first indication information.

Optionally, in the first security establishment, the first user equipment includes the first indication information in the hop-by-hop security establishment complete message sent to the first relay device.

Optionally, after the hop-by-hop unicast connection is established, the first user equipment includes the first indication information in a PC5-RRC message or a PC5-S message sent to the second user equipment.

Based on the foregoing steps, the hop-by-hop unicast connection between the first user equipment and the first relay device is established, to complete corresponding hop-by-hop security establishment, so that the first user equipment sends a measurement configuration and/or a bearer configuration to the first relay device.

S402: The first user equipment sends the configuration information to the first relay device.

The first user equipment sends the configuration information to the first relay device through the established hop-by-hop unicast connection. Specifically, the configuration information includes the bearer configuration and/or the measurement configuration.

Specifically, the bearer configuration may include an RLC bearer configuration. The RLC bearer configuration includes an RLC configuration and a logical channel (Logic Channel, LCH) configuration, and may include at least one of the following: a parameter related only to sending, and a parameter related to both sending and receiving.
① Parameter related only to sending (including one or more of the following parameters):
   - the RLC configuration includes: polling retransmission control timer duration T-PollRetransmit, polling triggering control parameters pollPDU and pollByte, and a maximum allowed quantity of times of automatic repeat request (automatic repeat request, ARQ) retransmission in RLC AM mode; and
   - the LCH configuration includes: a priority of the LCH, a related parameter that controls and executes logical channel prioritization (logical channel prioritization, LCP) (such as a logical channel priority, a prioritized bit rate (prioritized bit rate, PBR), bucket size duration (bucket size duration, BSD), or an indication indicating whether to allow use of configured grant type1), whether to enable hybrid automatic repeat request (hybrid automatic repeat request, HARQ) feedback, a scheduling request (scheduling request, SR) resource associated with the LCH, a logical channel group (Logical Channel Group, LCG) to which the LCH belongs, and the like.
② Parameter related to both sending and receiving (including one or more of the following parameters):
   - the RLC configuration includes an RLC mode and an RLC sequence length; and
   - the LCH configuration includes a logical channel identifier (logical channel ID, LCID).

For example, the measurement configuration includes a measurement object, a measurement report configuration, a measurement identifier, and the like. It may be understood that the measurement configuration is used to measure signal quality of a second unicast connection. For example, the first relay device obtains the signal quality of the second unicast connection by measuring signal quality of the first unicast connection and signal quality of a third unicast connection.

Optionally, the first user equipment may further send indication information 2 to the first relay device. The indication information 2 indicates whether the configuration information is currently used for the end-to-end unicast connection. For example, the indication information 2 may be 1-bit indication information. When the indication information is 1, it indicates that corresponding configuration information needs to be applied to the end-to-end unicast connection. When the indication information is 0, it indicates that corresponding configuration information is applied to the hop-by-hop unicast connection. A person skilled in the art may understand that when the identifier or bit information included in the first indication information has explicitly or implicitly indicated the relay device, that is, the configuration information needs to be used for the end-to-end unicast connection, the indication information 2 may not be sent additionally; otherwise, the indication information 2 is used for the foregoing indication.

S403: The first relay device uses the configuration information between the first user equipment and the first relay device or between the first relay device and the second user equipment for the end-to-end unicast connection.

In this embodiment of this application, S403 is an optional step.

In this embodiment of this application, if the first indication information or the indication information 2 indicates that the configuration information can be applied to the end-to-end unicast connection, the first relay device applies, to the end-to-end unicast connection, the bearer configuration and/or the measurement configuration received through the hop-by-hop unicast connection.

For example, the first relay device establishes a corresponding RLC bearer based on the received RLC bearer configuration, so that the first relay device may receive data sent by the first user equipment and forward the data to the second user equipment.

S404: The first relay device sends second indication information to the second user equipment.

In this embodiment of this application, S404 is an optional step.

Specifically, for S404, refer to S401. A difference lies in that the first relay device triggers establishment of the hop-by-hop unicast connection and a hop-by-hop security connection between the first relay device and the second user equipment, and sends the second indication information to the second user equipment, where content of the second indication information is similar to that of the first indication information.

Optionally, in S404, the second user equipment may trigger the establishment of the hop-by-hop unicast connection between the second user equipment and the first relay device, and send the second indication information to the first relay device.

S405: The first relay device sends the configuration information to the second user equipment.

In this embodiment of this application, S405 is an optional step.

The first relay device sends the configuration information to the second user equipment through the hop-by-hop unicast connection. For details, refer to step S402. Details are not described herein again. Optionally, if S404 is that the second user equipment sends the second indication information to the first relay device, S405 may also be that the second user equipment sends the configuration information to the first relay device.

S406: The second user equipment uses the configuration information for the end-to-end unicast connection.

In this embodiment of this application, S406 is an optional step.

For details, refer to S404. Details are not described herein again. Optionally, when S405 is that the second user equipment sends the configuration information to the first relay device, S406 is that the first relay device uses the configuration information for the end-to-end unicast connection.

S407. The first user equipment communicates with the second user equipment through the first relay device.

In this embodiment of this application, S407 may be understood as that the first relay device implements communication between the first user equipment and the second user equipment based on the first configuration information through the second unicast connection. For example, the first relay device receives data from the first user equipment, and forwards the data to the second user equipment; or the first relay device receives data from the second user equipment, and forwards the data to the first user equipment.

In this embodiment of this application, there may be no execution sequence between S401 to S403 and S404 to S406. For example, S401 to S403 may be first performed, and then S404 to S406 are performed. For example, S404 to S406 may be first performed, and then S401 to S403 are performed. For example, S401 to S403 and S404 to S406 may be performed simultaneously.

According to this embodiment of this application, the hop-by-hop unicast connection is associated with the end-to-end unicast connection through the indication information exchanged between the relay device and the user equipment, to configure a corresponding bearer and measurement for the end-to-end connection through the hop-by-hop unicast connection, and this ensures normal U2U relay communication.

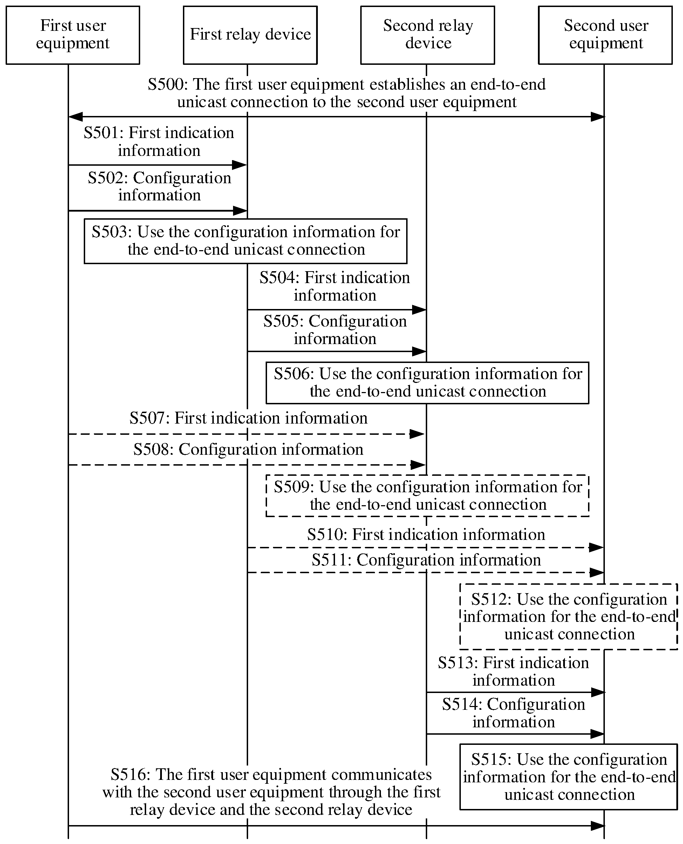

In this embodiment of this application, the foregoing UE-to-UE relay hop-by-hop unicast connection establishment may be extended to a multi-hop U2U relay scenario. FIG. 5 shows a flowchart of hop-by-hop unicast connection establishment/security in a multi-hop scenario (two hops herein are merely an example). As shown in FIG. 5, specific steps include S500 to S516.

S500: First user equipment and second user equipment establish a U2U relay end-to-end unicast connection, and complete corresponding end-to-end security establishment. A message related to the end-to-end unicast connection establishment needs to be forwarded through a first relay device and a second relay device.

In this embodiment of this application, this step is optional. Specifically, as shown in FIG. 3, this may be implemented through the following steps: The first user equipment sends an end-to-end unicast connection establishment request message, and the first relay device receives the unicast connection establishment request message; the first relay device forwards the end-to-end unicast connection establishment request message sent by the first user equipment, and the second relay device receives the end-to-end unicast connection establishment request message; the second relay device forwards the end-to-end unicast connection establishment request message sent by the first relay device, and the second user equipment receives the end-to-end unicast connection establishment request message; the second user equipment sends an end-to-end security establishment command message to the second relay device; the second relay device forwards, to the first relay device, the end-to-end security establishment command message sent by the second user equipment; the first relay device forwards, to the first user equipment, an end-to-end security establishment complete message sent by the second user equipment; the first user equipment sends the end-to-end security establishment complete message to the first relay device; the first relay device forwards, to the second relay device, the end-to-end security establishment complete message sent by the first user equipment; the second relay device forwards, to the second user equipment, the end-to-end security establishment complete message sent by the first user equipment; the second user equipment sends an end-to-end unicast connection establishment accept message to the second relay device; the second relay device forwards the end-to-end unicast connection establishment accept message of the second user equipment to the first relay device; and the first relay device forwards the end-to-end unicast connection establishment accept message of the second user equipment to the first user equipment.

S501: The first user equipment sends first indication information to the first relay device.

Specifically, for S501, refer to S401 in FIG. 4. It may be understood that, related content of S501 of the first user equipment in FIG. 5 is related content of S401 of the first user equipment in FIG. 4, and related content of S501 of the first relay device in FIG. 5 is related content of S401 of the first relay device in FIG. 4.

S502: The first user equipment sends configuration information to the first relay device.

For details, refer to S402. Details are not described herein again.

S503: The first relay device uses the received configuration information between the first user equipment and the first relay device, between the first relay device and the second relay device, or between the second relay device and the second user equipment for the end-to-end unicast connection.

For details, refer to S403. Details are not described herein again.

For S504 to S506, refer to S501 to S503. In this case, the first relay device, as an execution body, triggers establishment of a hop-by-hop unicast connection, sends the first indication information, and sends the configuration information. It may be understood that related content of the first relay device in S504 to S506 is related content of the first user equipment in S501 to S503, and related content of the second relay device in S504 to S506 is related content of the first relay device in S501 to S503.

For S507 to S509, refer to S501 to S503. In this case, the first user equipment, as an execution body, triggers the establishment of the hop-by-hop unicast connection, sends the first indication information, and sends the configuration information. It may be understood that related content of the first user equipment in S507 to S509 is related content of the first user equipment in S501 to S503, and related content of the second relay device in S507 to S509 is related content of the first relay device in S501 to S503. Steps S507 to S509 are optional.

For S510 to S512, refer to S501 to S503. In this case, the first relay device, as an execution body, triggers the establishment of the hop-by-hop unicast connection, sends the first indication information, and sends the configuration information. It may be understood that related content of the first relay device in S510 to S512 is related content of the first user equipment in S501 to S503, and related content of the second user equipment in S510 to S512 is related content of the first relay device in S501 to S503. Steps S510 to S512 are optional.

For S513 to S515, refer to S501 to S503. In this case, the second relay device, as an execution body, triggers the establishment of the hop-by-hop unicast connection, sends the first indication information, and sends the configuration information. It may be understood that related content of the second relay device in S513 to S515 is related content of the first user equipment in S501 to S503, and related content of the second user equipment in S513 to S515 is related content of the first relay device in S501 to S503.

S516: The first user equipment communicates with the second user equipment through the first relay device and the second relay device.

According to this embodiment of this application, in the multi-hop scenario, the hop-by-hop unicast connection is associated with the end-to-end unicast connection through the indication information, so that a corresponding bearer and/or measurement may be configured for the corresponding end-to-end unicast connection through the hop-by-hop unicast connection. This ensures normal U2U relay communication in the multi-hop scenario, and helps improve communication service quality.

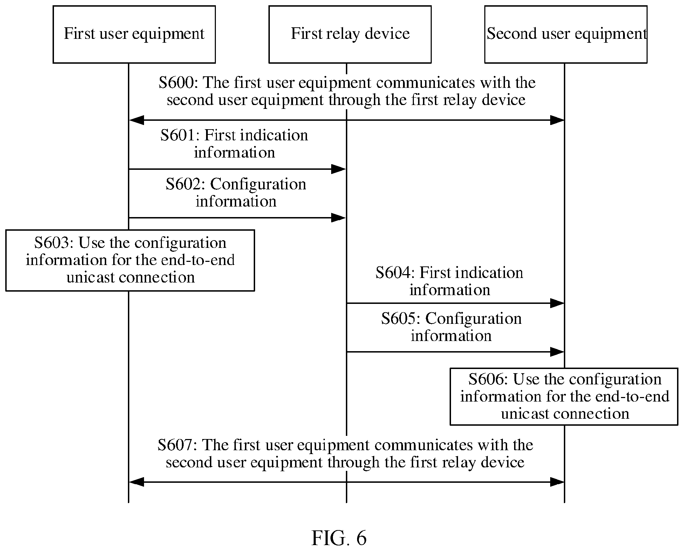

An embodiment of this application provides another relay communication method, as shown in FIG. 6. For example, a first relay device triggers establishment of a hop-by-hop unicast connection and hop-by-hop security with first user equipment in S600, and sends first indication information to the first user equipment in S601. The first relay device sends first configuration information to the first user equipment in S602, and the first user equipment uses the configuration information between the first user equipment and the first relay device for an end-to-end unicast connection in S603. In S604, the first relay device triggers establishment of a hop-by-hop unicast connection to second user equipment, and sends second indication information to the second user equipment. The first relay device sends second configuration information to the second user equipment in S605, and the second user equipment uses the configuration information between the first relay device and the second user equipment for the end-to-end unicast connection in S606. In S607, the first user equipment communicates with the second user equipment through the first relay device. For related descriptions, refer to S401 to S407 in the foregoing embodiment.

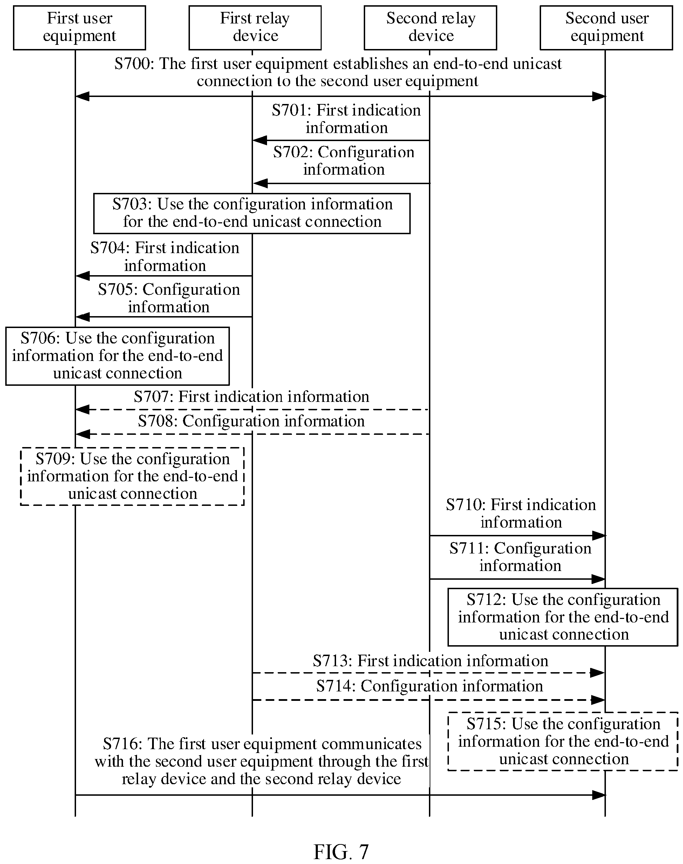

In this embodiment of this application, the foregoing method may be extended to a multi-hop relay scenario. FIG. 7 shows a flowchart of establishing a hop-by-hop unicast connection and hop-by-hop security in a multi-hop scenario (two hops herein are merely an example). Specifically, refer to the method in the multi-hop scenario in the foregoing Manner 1.

According to this embodiment of this application, the hop-by-hop unicast connections between the first user equipment and the first relay device and between the first relay device and the second user equipment can be established, to complete corresponding hop-by-hop security establishment. Further, a corresponding hop-by-hop unicast connection is associated with the end-to-end unicast connection through indication information, to configure a corresponding bearer and measurement for the end-to-end connection through the hop-by-hop unicast connection, and this ensures normal U2U relay communication.

An embodiment of this application further provides a relay communication method. The method has the following manners:
Manner 1: First user equipment and a first relay device respectively trigger two segments of hop-by-hop security establishment.

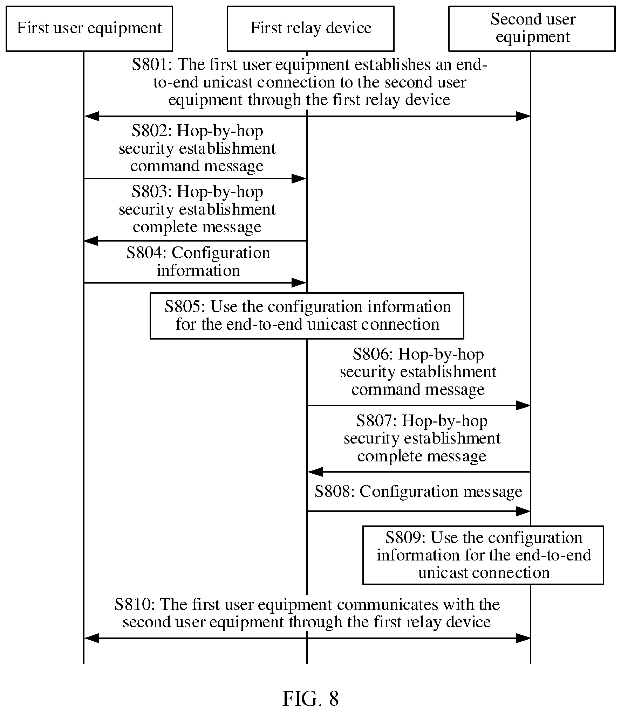

FIG. 8 is a flowchart of establishing a U2U relay hop-by-hop security connection according to an embodiment of this application. A procedure of the hop-by-hop security establishment is combined with a corresponding end-to-end unicast connection establishment procedure.

For example, the first relay device receives a first security establishment command message from the first user equipment; the first relay device sends a first security establishment complete message to the first user equipment; the first relay device receives first configuration information from the first user equipment through a first unicast connection corresponding to first security; and the first relay device communicates with the first user equipment through a second unicast connection based on the first configuration information, where the second unicast connection is used for communication between the first user equipment and second user equipment through the first relay device.

Optionally, the first relay device establishes third security between the first relay device and the second user equipment.

Optionally, the first relay device sends second configuration information to the second user equipment through the third security, where the second configuration information is used for the second unicast connection.

Specifically, as shown in FIG. 8, the procedure includes S801, S802, S803, S804, S805, S806, S807, S808, S809 and S810.

S801: The first user equipment establishes a U2U relay end-to-end unicast connection to a second user equipment through the first relay device, and completes corresponding end-to-end security establishment.

In this embodiment of this application, this step is optional. Specifically, refer to a flowchart of an end-to-end unicast connection in FIG. 2.

In this embodiment of this application, there is no sequence between S801 and subsequent steps, and the subsequent steps may be performed in a process of S801. S801 may include a sub-step. For example, execution of S802 may be triggered after the first user equipment receives an end-to-end security establishment command message forwarded by the first relay device.

S802: The first user equipment sends a hop-by-hop security establishment command message to the first relay device.

In this embodiment of this application, a source address of the message in S802 is a first user equipment L2 ID of the end-to-end unicast connection, and a destination address is R-L2-ID-b of the end-to-end unicast connection.

Optionally, S802 may be performed after S204b in FIG. 2, to be specific, triggered by receiving, by the first user equipment, the end-to-end security establishment command message forwarded by the first relay device.

Optionally, S802 may be performed after S205a in FIG. 2, to be specific, triggered by sending an end-to-end security establishment complete message by the first user equipment.

Optionally, S802 may be performed after S206b in FIG. 2, to be specific, triggered by receiving, by the first user equipment, an end-to-end unicast establishment accept message forwarded by the first relay device.

S803: The first relay device sends a hop-by-hop security establishment complete message to the first user equipment.

Specifically, a source address of the message in S805 is R-L2-ID-b of the end-to-end unicast connection, and a destination address is the first user equipment L2 ID of the end-to-end unicast connection.

S804: The first user equipment sends the first configuration information to the first relay device.

In this embodiment of this application, the configuration information includes a bearer configuration and/or a measurement configuration. The first relay device may use the configuration information for the end-to-end unicast connection. For details, refer to S402.

S805: The first relay device uses the received configuration information for the end-to-end unicast connection.

For details, refer to S403. Details are not described herein again.

S806: The first relay device sends the hop-by-hop security establishment command message to the second user equipment.

Specifically, in S806, a source address of the message is R-L2-ID-a of the end-to-end unicast connection, and a destination address is a second user equipment L2 ID of the end-to-end unicast connection.

Optionally, S806 may be performed after S204a in FIG. 2, to be specific, triggered by receiving, by the first relay device, the end-to-end security establishment command message sent by the second user equipment.

Optionally, S806 may be performed after S204b in FIG. 2, to be specific, triggered by forwarding the end-to-end security establishment command message by the first relay device.

Optionally, S806 may be performed after S205a in FIG. 2, to be specific, triggered by receiving, by the first relay device, the security establishment complete message sent by the first user equipment.

Optionally, S806 may be performed after S205b in FIG. 2, to be specific, triggered by forwarding the end-to-end security establishment complete message by the first relay device.

Optionally, S806 may be performed after S206a in FIG. 2, to be specific, performed when the first relay device receives a unicast connection establishment accept message sent by the second user equipment.

Optionally, S806 may be performed after S206b in FIG. 2, to be specific, performed when the first relay device forwards the end-to-end unicast connection establishment accept message.

Optionally, S806 may be performed after S802, to be specific, triggered by receiving, by the first relay device, the hop-by-hop security establishment command message sent by the first user equipment.

Optionally, S806 may be performed after S803, to be specific, triggered by sending the hop-by-hop security establishment complete message to the first user equipment by the first relay device.

Optionally, S806 may be performed after S804, to be specific, triggered by sending the configuration information to the first relay device by the first user equipment.

S807: The second user equipment sends the hop-by-hop security establishment complete message to the first relay device.

Specifically, in S807, a source address of the message is the second user equipment L2 ID of the end-to-end unicast connection, and a destination address is R-L2-ID-a of the end-to-end unicast connection.

S808: The first relay device sends second configuration information to the second user equipment.

In this embodiment of this application, the configuration information includes the bearer configuration and/or the measurement configuration, and the second user equipment may use the configuration information for the end-to-end unicast connection. For details, refer to S402.

S809: The second user equipment uses the received configuration information for the end-to-end unicast connection.

For details, refer to S403. Details are not described herein again.

S810: The first user equipment communicates with the second user equipment through the first relay device. In this embodiment of this application, there may be no execution sequence between S802 to S805 and S806 to S809. In other words, S802 to S805 may be first performed, and then S806 to S809 are performed. Alternatively, S806 to S809 are first performed, and then S802 to S805 are performed. Alternatively, S802 to S805 and S806 to S809 are simultaneously performed.

According to this embodiment of this application, a process of the hop-by-hop security establishment is integrated into a process of the end-to-end unicast connection establishment or is after a process of the end-to-end unicast connection establishment, the hop-by-hop unicast connection does not need to be established, and this saves resources of the user equipment and the relay device. Hop-by-hop security is established, so that a corresponding bearer and measurement may be configured for an end-to-end connection, and this ensures normal U2U relay communication and improve communication service quality.

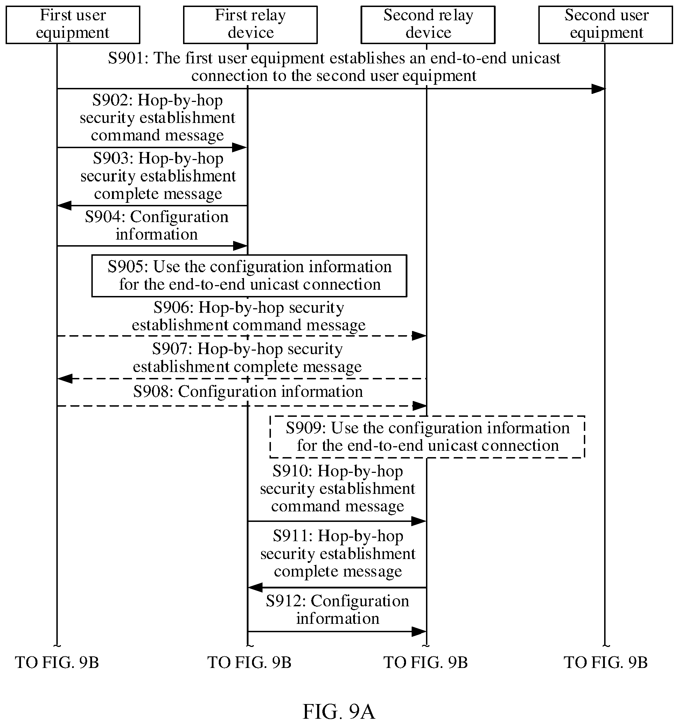

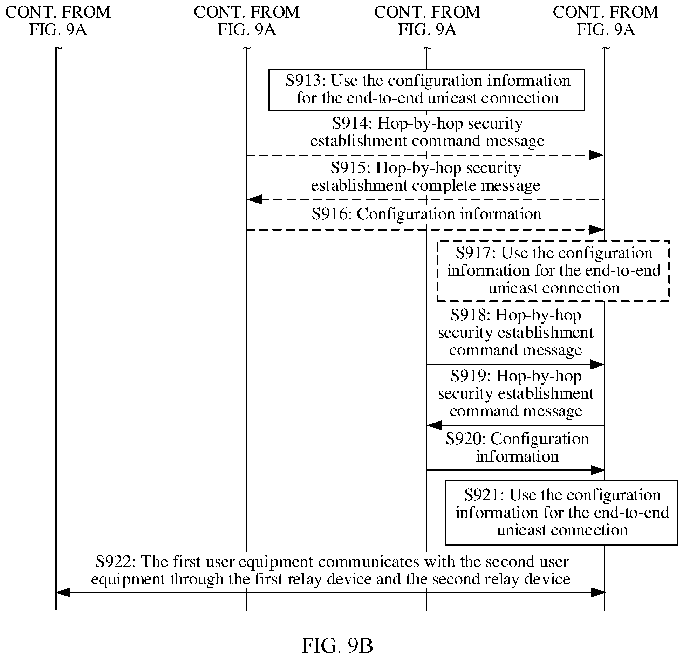

In this embodiment of this application, the foregoing U2U relay hop-by-hop unicast connection establishment may be extended to a multi-hop U2U relay scenario (two hops herein are merely an example). FIG. 9A and FIG. 9B show a flowchart of establishing hop-by-hop security in a multi-hop scenario. A procedure of the hop-by-hop security establishment is combined with a corresponding end-to-end unicast connection establishment procedure. As shown in FIG. 9A and FIG. 9B, there is no strict sequence for performing steps.

S901: First user equipment establishes a U2U relay end-to-end unicast connection to second user equipment, and completes corresponding end-to-end security establishment. A message in a process of establishing the end-to-end hop-by-hop unicast connection is forwarded by a first relay device and a second relay device.

In this embodiment of this application, this step is optional. For details, refer to FIG. 3.

S902: The first user equipment sends a hop-by-hop security establishment command message to the first relay device.

In this embodiment of this application, a source address of the message is a first user equipment layer 2 ID of the end-to-end unicast connection, and a destination address is R1 -L2-ID-b of the end-to-end unicast connection. A condition for triggering a device 1 to send the hop-by-hop security establishment command message to a device 2 is that the device 1 receives or sends a message.

Optionally, S902 is performed after S302c in FIG. 3, to be specific, triggered by receiving an end-to-end security establishment command message by the first user equipment.

Optionally, S902 is performed after S303a in FIG. 3, to be specific, triggered by sending an end-to-end security establishment complete message by the first user equipment.

Optionally, S902 is performed after S304c in FIG. 3, to be specific, triggered by receiving an end-to-end unicast connection establishment accept message by the first user equipment.

S903: The first relay device sends a hop-by-hop security establishment complete message to the first user equipment.

In this embodiment of this application, a source address of the message is R1-L2-ID-b, and a destination address of the message is the first user equipment layer 2 ID.

S904: The first user equipment sends configuration information to the first relay device.

For details, refer to S402. Details are not described herein again.

S905: The first relay device uses the received configuration information for the end-to-end unicast connection.

For details, refer to S403. Details are not described herein again.

S906: The first user equipment sends the hop-by-hop security establishment command message to the second relay device.

In this embodiment of this application, the message is forwarded by the first relay device, and this step is optional. A source address of the message is the first user equipment layer 2 ID of the end-to-end unicast connection, and a destination address is R2-L2-ID-b of the end-to-end unicast connection.

Optionally, S906 is performed after S302c in FIG. 3, to be specific, triggered by receiving the end-to-end security establishment command message by the first user equipment.

Optionally, S906 is performed after S303a in FIG. 3, to be specific, triggered by sending the end-to-end security establishment complete message by the first user equipment.

Optionally, S906 is performed after S304c in FIG. 3, to be specific, triggered by receiving the end-to-end unicast connection establishment accept message by the first user equipment.

Optionally, S906 is performed after S902 in FIG. 9A, to be specific, triggered by sending the hop-by-hop security establishment command message by the first user equipment.

Optionally, S906 is performed after S903 in FIG. 9A, to be specific, triggered by receiving the hop-by-hop security establishment complete message by the first user equipment.

Optionally, S906 is performed after S904 in FIG. 9A, to be specific, triggered by sending the configuration information to the first relay device by the first user equipment.

S907: The second relay device sends the hop-by-hop security establishment complete message to the first user equipment.

In this embodiment of this application, the message is forwarded by the first relay equipment, and this step is optional. A source address of the message is R2-L2-ID-b of the end-to-end unicast connection, and a destination address of the message is the first user equipment layer 2 ID of the end-to-end unicast connection.

S908: The first user equipment sends the configuration information to the second relay device.

In this embodiment of this application, this step is optional. For details, refer to S402. Details are not described herein again.

S909: The second relay device uses the received configuration information for the end-to-end unicast connection.

In this embodiment of this application, this step is optional. For details, refer to S403. Details are not described herein again.

S910: The first relay device sends the security establishment command message to the second relay device.

In this embodiment of this application, a source address of the message is R1-L2-ID-a of the end-to-end unicast connection, and a destination address is R2-L2-ID-b of the end-to-end unicast connection.

Optionally, S910 may be performed after S302b in FIG. 3, to be specific, triggered by receiving the end-to-end security establishment command message by the first relay device.

Optionally, S910 may be performed after S302c in FIG. 3, to be specific, triggered by forwarding the end-to-end security establishment command message by the first relay device.

Optionally, S910 may be performed after S303a in FIG. 3, to be specific, triggered by receiving the end-to-end security establishment complete message by the first relay device.

Optionally, S910 may be performed after S303b in FIG. 3, to be specific, triggered by forwarding the end-to-end security establishment complete message by the first relay device.

Optionally, S910 may be performed after S304b in FIG. 3, to be specific, triggered by receiving the end-to-end unicast connection establishment accept message by the first relay device.

Optionally, S910 may be performed after S304c in FIG. 3, to be specific, triggered by forwarding the end-to-end unicast connection establishment accept message by the first relay device.

Optionally, S910 may be performed after S902, to be specific, triggered by receiving the hop-by-hop security establishment command message by the first relay device.

Optionally, S910 may be performed after S903, to be specific, triggered by sending the hop-by-hop security establishment complete message by the first relay device.

Optionally, S910 may be performed after S904, to be specific, triggered by receiving the configuration information from the first user equipment by the first relay device.

S911: The second relay device sends the hop-by-hop security establishment complete message to the first relay device.

In this embodiment of this application, a source address of the message is R2-L2-ID-b of the end-to-end unicast connection, and a destination address is R1-L2-ID-a of the end-to-end unicast connection.

S912: The first relay device sends the configuration information to the second relay device.

For details, refer to S402. Details are not described herein again.

S913: The second relay device uses the received configuration information for the end-to-end unicast connection.

For details, refer to S403. Details are not described herein again.

S914: The first relay device sends the hop-by-hop security establishment command message to the second user equipment.

In this embodiment of this application, the message is forwarded by the second relay device, and this step is optional. A source address of the message is R1 -L2-ID-a of the end-to-end unicast connection, and a destination address is a second user equipment layer 2 ID of the end-to-end unicast connection.

Optionally, S914 may be performed after S302b in FIG. 3, to be specific, triggered by receiving the end-to-end security establishment command message by the first relay device.

Optionally, S914 may be performed after S302c in FIG. 3, to be specific, triggered by forwarding the end-to-end security establishment command message by the first relay device.

Optionally, S914 may be performed after S303a in FIG. 3, to be specific, triggered by receiving the end-to-end security establishment complete message by the first relay device.

Optionally, S914 may be performed after S303b in FIG. 3, to be specific, triggered by forwarding the end-to-end security establishment complete message by the first relay device.

Optionally, S914 may be performed after S304b in FIG. 3, to be specific, triggered by receiving the end-to-end unicast connection establishment accept message by the first relay device.

Optionally, S914 may be performed after S304c in FIG. 3, to be specific, triggered by forwarding the end-to-end unicast connection establishment accept message by the first relay device.

Optionally, S914 may be performed after S902, to be specific, triggered by receiving, by the first relay device, the hop-by-hop security establishment command message sent by the first user equipment.

Optionally, S914 may be performed after S903, to be specific, triggered by sending the hop-by-hop security establishment complete message by the first relay device to the first user equipment.

Optionally, S910 may be performed after S904, to be specific, triggered by receiving the configuration information from the first user equipment by the first relay device.

Optionally, S914 may be performed after S910, to be specific, triggered by sending the security establishment command message by the first relay device to the second relay device.

Optionally, S914 may be performed after S911, to be specific, triggered by sending the security establishment complete message by the first relay device to the first user equipment.

Optionally, S910 may be performed after S912, to be specific, triggered by sending the configuration information by the first relay device to the second relay device.

S915: The second user equipment sends the hop-by-hop security establishment complete message to the first relay device.

In this embodiment of this application, the message is forwarded by the second relay device, and this step is optional. A source address of the message is the second user equipment layer 2 ID of the end-to-end unicast connection, and a destination address is R1-L2-ID-a of the end-to-end unicast connection.

S916: The first relay device sends the configuration information to the second user equipment.

In this embodiment of this application, this step is optional. For details, refer to S402. Details are not described herein again.

S917: The second user equipment uses the received configuration information for the end-to-end unicast connection.

In this embodiment of this application, this step is optional. For details, refer to S403. Details are not described herein again.

S918: The second relay device sends the hop-by-hop security establishment command message to the second user equipment.

In this embodiment of this application, a source address of the message is R2-L2-ID-a of the end-to-end unicast connection, and a destination address of the message is the second user equipment layer 2 ID of the end-to-end unicast connection.

Optionally, S918 may be performed after S302a in FIG. 3, to be specific, triggered by sending, by the second relay device, the end-to-end security establishment command message.

Optionally, S918 may be performed after S302b in FIG. 3, to be specific, triggered by forwarding, by the second relay device, the end-to-end security establishment command message.

Optionally, S918 may be performed after S303b in FIG. 3, to be specific, triggered by receiving, by the second relay device, the end-to-end security establishment complete message.

Optionally, S918 may be performed after S303c in FIG. 3, to be specific, triggered by forwarding, by the second relay device, the end-to-end security establishment complete message.

Optionally, S910 may be performed after S310a in FIG. 3, to be specific, triggered by receiving, by the second relay device, the end-to-end unicast connection establishment accept message.

Optionally, S918 may be performed after S310b in FIG. 3, to be specific, triggered by forwarding, by the second relay device, the end-to-end unicast connection establishment accept message.

Optionally, S918 may be performed after S906, to be specific, triggered by receiving, by the second relay device, the security establishment command message sent by the first user equipment.

Optionally, S918 may be performed after S907, to be specific, triggered by sending, by the second relay device, the security establishment complete message to the first user equipment.

Optionally, S918 may be performed after S908, to be specific, triggered by receiving, by the second relay device, the configuration information sent by the first user equipment.

Optionally, S918 may be performed after S910, to be specific, triggered by receiving, by the second relay device, the hop-by-hop security establishment command message sent by the first relay device.

Optionally, S918 may be performed after S911, to be specific, triggered by sending, by the second relay device, the hop-by-hop security establishment complete message to the first relay device.

Optionally, S918 may be performed after S912, to be specific, triggered by receiving, by the second relay device, the configuration information sent by the first relay device.

S919: The second user equipment sends the hop-by-hop security establishment complete message to the second relay device.

In this embodiment of this application, a source address of the message is the second user equipment layer 2 ID of the end-to-end unicast connection, and a destination address is R2-L2-ID-a of the end-to-end unicast connection.

S920: The second relay device sends the configuration information to the second user equipment.

For details, refer to S402. Details are not described herein again.

S921: The second user equipment uses the received configuration information for the end-to-end unicast connection.

For details, refer to S403. Details are not described herein again.

S922: The first user equipment communicates with the second user equipment through the first relay device and the second relay device.

According to this embodiment of this application, normal U2U relay communication in a multi-hop scenario is ensured, and communication service quality is improved.

Manner 2: The second user equipment and the first relay device respectively trigger two segments of hop-by-hop security establishment.

In this embodiment of this application, a main difference of this manner from Manner 1 lies in a different triggering subject and sequence. The second user equipment and the first relay device respectively trigger two segments of hop-by-hop security establishment.

For example, the first relay device receives a third security establishment command message from the second user equipment; the first relay device sends a third security establishment complete message to the second user equipment; the first relay device receives second configuration information from the second user equipment through a first unicast connection corresponding to first security; and the first relay device communicates with the second user equipment through a second unicast connection based on the second configuration information, where the second unicast connection is used for communication between the first user equipment and the second user equipment through the first relay device.

Optionally, the first relay device establishes first security between the first relay device and the first user equipment.

Optionally, the first relay device sends first configuration information to the first user equipment through the first security, where the first configuration information is used for the second unicast connection.

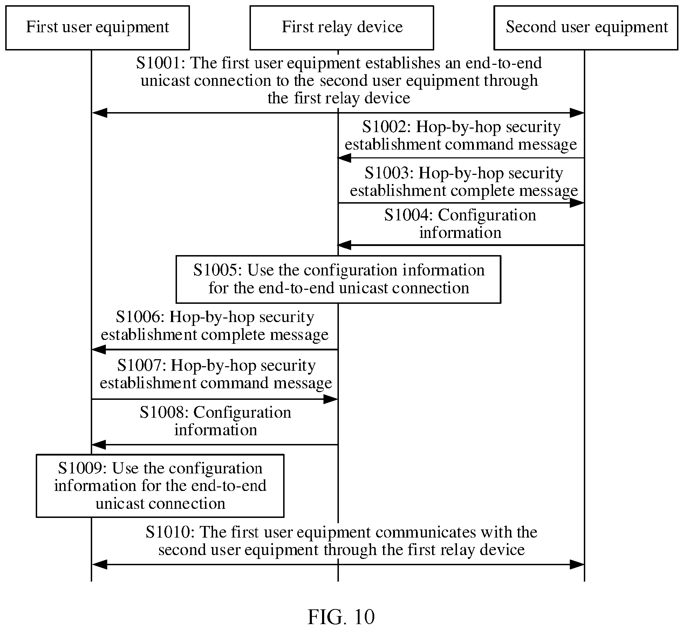

FIG. 10 is a flowchart of U2U relay hop-by-hop security establishment in Manner 2 according to an embodiment of this application. A procedure of the hop-by-hop security establishment is combined with a corresponding end-to-end unicast connection establishment procedure. Specifically, refer to the method in Manner 1.

Optionally, S1002 may be performed after S204a in FIG. 2, to be specific, triggered by sending, by a second user equipment, an end-to-end unicast security establishment command message. Optionally, S1002 may be performed after S205b in FIG. 2, to be specific, triggered by receiving, by the second user equipment, an end-to-end unicast security establishment complete message forwarded by the first relay device. Optionally, S1002 may be performed after S206a, to be specific, triggered by sending an end-to-end unicast connection establishment accept message by the second user equipment to the first relay device.

Optionally, S 1006 may be performed after S204a in FIG. 2, to be specific, triggered by receiving, by the first relay device, the end-to-end security establishment command message sent by the second user equipment. Optionally, S1006 may be performed after S204b in FIG. 2, to be specific, triggered by forwarding, by the first relay device, the end-to-end security establishment command message. Optionally, S1006 may be performed after S205a in FIG. 2, to be specific, triggered by receiving, by the first relay device, the security establishment complete message sent by the first user equipment. Optionally, S1006 may be performed after S205b in FIG. 2, to be specific, triggered by forwarding, by the first relay device, the end-to-end security establishment complete message. Optionally, S1006 may be performed after S206a in FIG. 2, to be specific, performed when the first relay device receives the unicast connection establishment accept message sent by the second user equipment. Optionally, S1006 may be performed after S206b in FIG. 2, to be specific, performed when the first relay device forwards the end-to-end unicast connection establishment accept message. Optionally, S 1006 may be performed after S 1002, to be specific, triggered by receiving, by the first relay device, the hop-by-hop security establishment command message sent by the second user equipment. Optionally, S1006 may be performed after S1003, to be specific, triggered by sending the hop-by-hop security establishment complete message by the first relay device to the second user equipment. Optionally, S1006 may be performed after S1004, to be specific, triggered by sending, by the second user equipment, the configuration information to the first relay device.

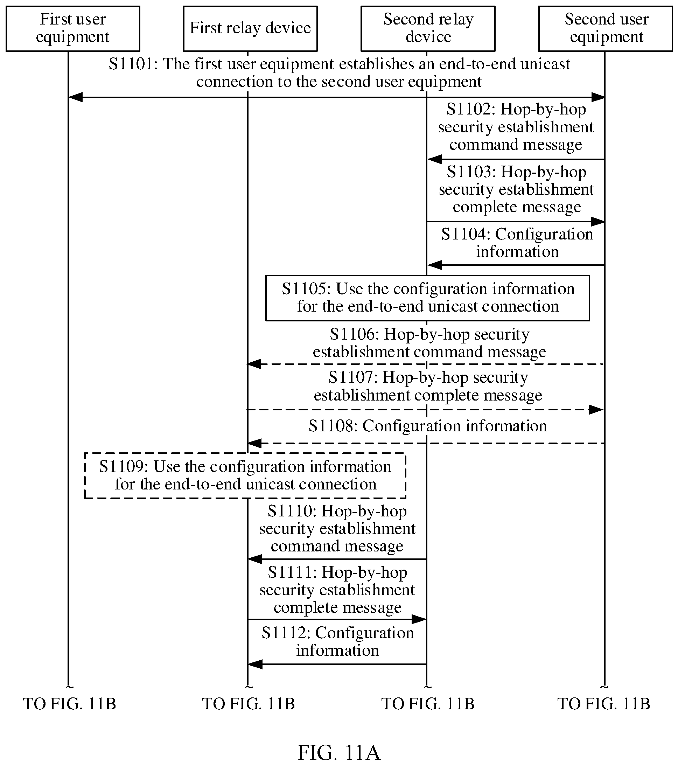

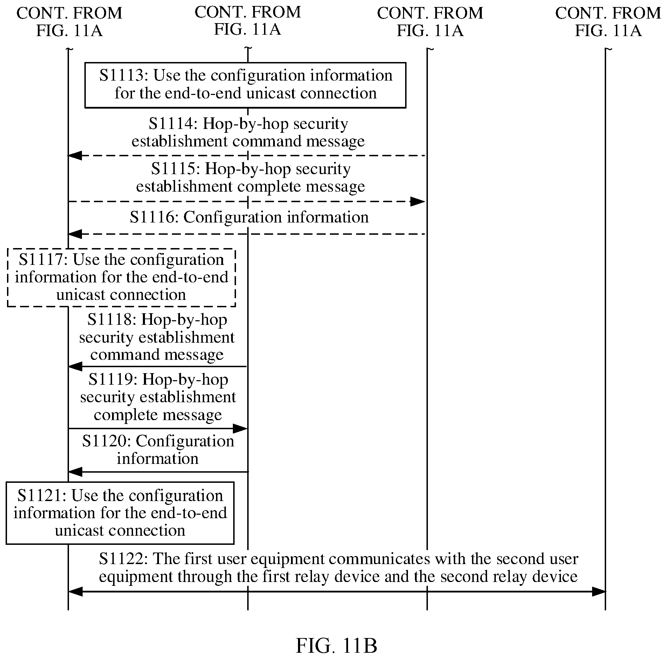

In this embodiment of this application, the U2U relay hop-by-hop unicast security establishment in Manner 2 may be extended to a multi-hop U2U relay scenario (two hops herein are merely an example). FIG. 11A and FIG. 11B are a flowchart of hop-by-hop security connection establishment in a multi-hop scenario. A procedure of the hop-by-hop security connection establishment is associated with an end-to-end unicast connection establishment procedure. For details, refer to the method in the multi-hop scenario in Manner 1.

Manner 3: The first relay device separately triggers two segments of hop-by-hop security establishment.

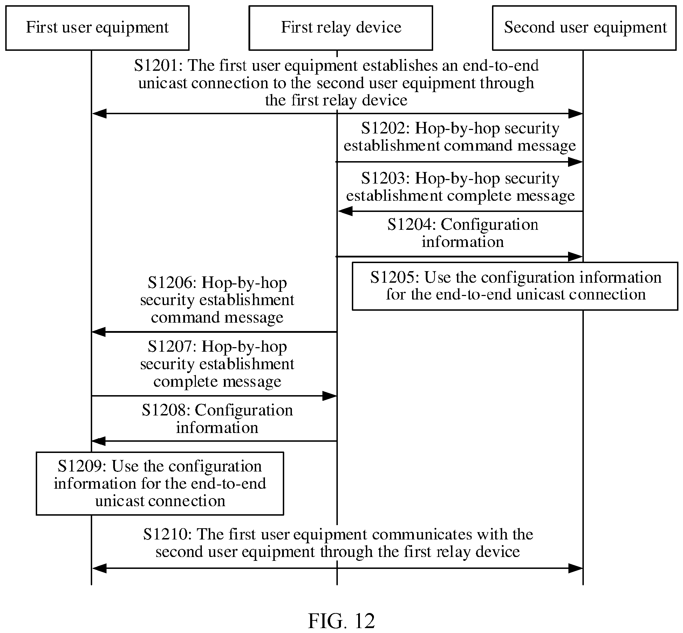

In this embodiment of this application, a main difference of this manner from Manner 1 lies in a different triggering subject and sequence, and the first relay device separately triggers two segments of hop-by-hop security establishment. FIG. 12 is a flowchart of U2U relay hop-by-hop security establishment according to an embodiment of this application. A procedure of the hop-by-hop security establishment is combined with a corresponding end-to-end unicast connection establishment procedure. Specifically, refer to the method in Manner 1.

Optionally, S1202 may be performed after S204a in FIG. 2, to be specific, triggered by receiving, by a first relay device, an end-to-end security establishment command message sent by second user equipment. Optionally, S 1202 may be performed after S204b in FIG. 2, to be specific, triggered by forwarding, by the first relay device, the end-to-end security establishment command message. Optionally, S 1202 may be performed after S205a in FIG. 2, to be specific, triggered by receiving, by the first relay device, a security establishment complete message sent by first user equipment. Optionally, S 1202 may be performed after S205b in FIG. 2, to be specific, triggered by forwarding, by the first relay device, an end-to-end security establishment complete message. Optionally, S 1202 may be performed after S206a in FIG. 2, to be specific, performed when the first relay device receives a unicast connection establishment accept message sent by the second user equipment. Optionally, S 1202 may be performed after S206b in FIG. 2, to be specific, performed when the first relay device forwards the end-to-end unicast connection establishment accept message.

Optionally, S 1206 may be performed after S204a in FIG. 2, to be specific, triggered by receiving, by the first relay device, the end-to-end security establishment command message sent by the second user equipment. Optionally, S 1206 may be performed after S204b in FIG. 2, to be specific, triggered by forwarding, by the first relay device, the end-to-end security establishment command message. Optionally, S 1206 may be performed after S205a in FIG. 2, to be specific, triggered by receiving, by the first relay device, the security establishment complete message sent by the first user equipment. Optionally, S 1206 may be performed after S205b in FIG. 2, to be specific, triggered by forwarding, by the first relay device, the end-to-end security establishment complete message. Optionally, S 1206 may be performed after S206a in FIG. 2, to be specific, performed when the first relay device receives the unicast connection establishment accept message sent by the second user equipment. Optionally, S1206 may be performed after S206b in FIG. 2, to be specific, performed when the first relay device forwards the end-to-end unicast connection establishment accept message. Optionally, S 1206 may be performed after S 1202, to be specific, triggered by sending the hop-by-hop security establishment command message by the first relay device to the second user equipment. Optionally, S1206 may be performed after S1203, to be specific, triggered by receiving, by the first relay device, the hop-by-hop security establishment complete message sent by the second user equipment. Optionally, S1206 may be performed after S 1204, to be specific, triggered by sending, by the first relay device, the configuration information to the second user equipment.

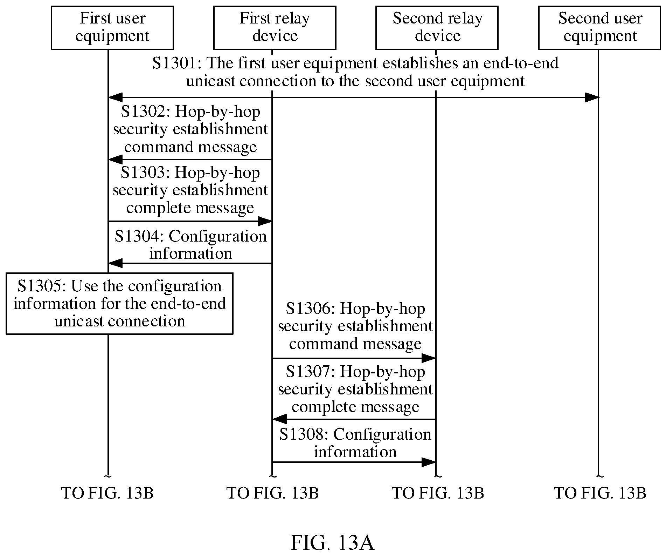

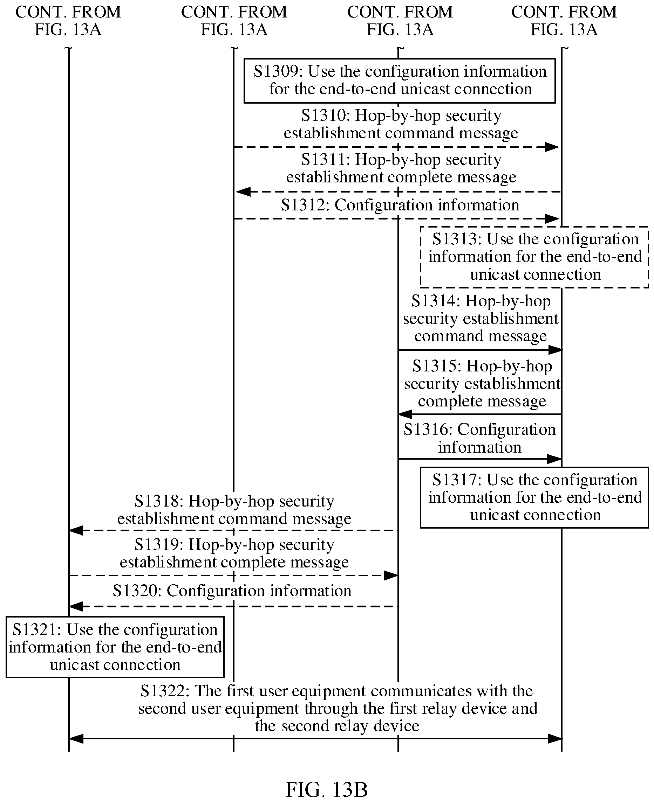

In this embodiment of this application, the U2U relay hop-by-hop security establishment in the foregoing Manner 3 may be extended to a multi-hop U2U relay scenario (two hops herein are merely an example). FIG. 13A and FIG. 13B are a flowchart of hop-by-hop security establishment in a multi-hop scenario. A procedure of the hop-by-hop security establishment is combined with an end-to-end unicast connection establishment process. Specifically, refer to the method in the multi-hop scenario in Manner 1.

It may be understood that, to implement the functions in the foregoing embodiments, a network device and a terminal device include corresponding hardware structures and/or software modules for performing the functions. A person skilled in the art should easily be aware that, in combination with the units and the method steps in the examples described in embodiments disclosed in this application, this application can be implemented by hardware, software, or a combination of hardware and software. Whether a function is performed by hardware, software, or hardware driven by computer software depends on particular application scenarios and design constraints of the technical solutions.

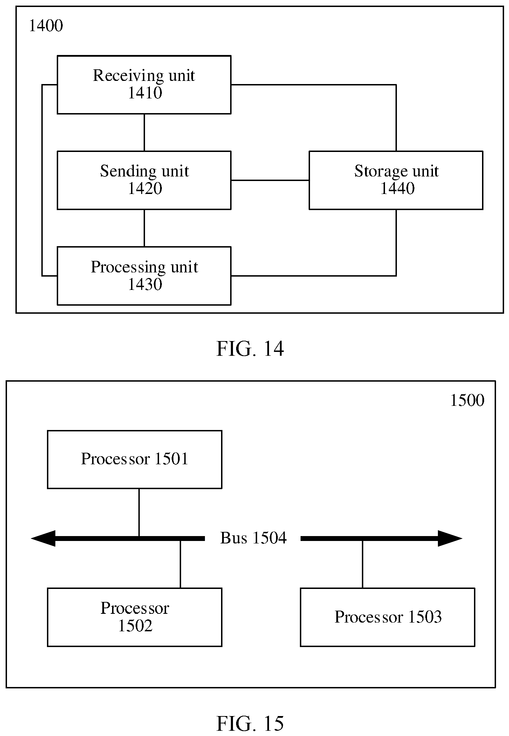

Apparatuses provided in embodiments of this application are described below in detail with reference to FIG. 14 and FIG. 15. It should be understood that descriptions of apparatus embodiments correspond to the descriptions of the method embodiments. Therefore, for a content that is not described in detail, refer to the foregoing method embodiments. For brevity, some content is not described again.

FIG. 14 shows a communication apparatus 1400 according to an embodiment of this application. The communication apparatus 1400 may be the user equipment mentioned in the foregoing embodiments or an apparatus supporting the user equipment in implementing the foregoing method, or the communication apparatus 1400 may be the relay device mentioned in the foregoing embodiments or an apparatus supporting the relay device in implementing the foregoing method. The communication apparatus 1400 includes at least a processing unit 1430, a receiving unit 1410, and a sending unit 1420.

It should be noted that the processing unit in this embodiment of this application may be referred to as a processing module or a processing circuit, the receiving unit may also be referred to as a receiving module, and the sending unit may also be referred to as a sending module. The receiving unit and the sending unit may also be referred to as or integrated into a transceiver unit together.

In a possible design, the communication apparatus 1400 may correspondingly implement a corresponding operation of the first user equipment in the foregoing method, and the communication apparatus 1400 may include a unit configured to perform the method performed by the first user equipment in the foregoing method. In addition, the units in the communication apparatus 1400 and the foregoing other operations and/or functions are separately used to implement corresponding procedures in the foregoing method.

In a possible design, the communication apparatus 1400 may correspondingly implement a corresponding operation of the second user equipment in the foregoing method, and the communication apparatus 1400 may include a unit configured to perform the method performed by the first user equipment in the foregoing method. In addition, the units in the communication apparatus 1400 and the foregoing other operations and/or functions are separately used to implement corresponding procedures in the foregoing method.

In a possible design, the communication apparatus 1400 may correspondingly implement a corresponding operation of the first relay device in the foregoing method, and the communication apparatus 1400 may include a unit configured to perform the method performed by the first user equipment in the foregoing method. In addition, the units in the communication apparatus 1400 and the foregoing other operations and/or functions are separately used to implement corresponding procedures in the foregoing method.

Optionally, corresponding to the foregoing possible designs, the communication apparatus 1400 may further include a storage unit 1440. The storage unit 1440 may be configured to store computer-executable instructions, data, and/or other information. The processing unit 1430 may read the instructions or the data stored in the storage unit 1440, to implement a corresponding solution.

In a possible design, the processing unit 1430 may be a processor, for example, a processor 1501 shown in FIG. 15. The sending unit 1420 and the receiving unit 1410 each may be a transceiver apparatus, for example, the transceiver apparatus 1503 shown in FIG. 15. Alternatively, the sending unit 1420 and the receiving unit 1410 each may be a communication interface, a circuit, or another apparatus that can implement a transceiver function. The storage unit 1440 may be a memory, for example, a memory 1502 shown in FIG. 15.

Based on a same technical concept, an embodiment of this application further provides a communication apparatus, configured to implement a function performed by the first user equipment, the second user equipment, or the first relay device in the foregoing method embodiments. FIG. 15 is a schematic block diagram of a possible communication apparatus 1500 according to an embodiment of this application. The communication apparatus includes at least a processor 1501, a memory 1502, and optionally includes a transceiver apparatus 1503 and a system bus 1504. The bus 1504 may be a PCI bus, an EISA bus, or the like. The bus may be classified into an address bus, a data bus, a control bus, and the like. For ease of representation, only one thick line is used to represent the bus in FIG. 15, but this does not mean that there is only one bus or only one type of bus. The transceiver apparatus 1503 is used by the communication apparatus 1500 to communicate and interact with another communication device (for example, a radio access network device or user equipment, where this is not limited herein), for example, exchange control signaling and/or service data. The transceiver apparatus 1503 may be implemented by using a circuit that has a communication and transceiver function, a communication interface, or the like. The memory 1502 is configured to store needed program instructions and/or data. When the at least one processor invokes and executes the program instructions stored in the memory, the communication apparatus is enabled to implement a function of the first user equipment in the foregoing method; or when the at least one processor invokes and executes the program instructions stored in the memory, the communication apparatus is enabled to implement a function of the second user equipment in the foregoing method; or when the at least one processor invokes and executes the program instructions stored in the memory, the communication apparatus is enabled to implement a function of the first relay device in the foregoing method. The at least one processor 1501, the memory 1502, and the transceiver apparatus 1503 are coupled through the system bus 1504.

In this embodiment of this application, when there is no logical conflict, embodiments may be mutually referenced. For example, methods and/or terms in the method embodiments may be mutually referenced, and functions and/or terms in the apparatus embodiments may be mutually referenced. For example, functions and/or terms between the apparatus embodiments and the method embodiments may be mutually referenced.

The processor and the transceiver apparatus described in the embodiments of this application may be implemented on an integrated circuit (integrated circuit, IC), an analog IC, a radio frequency integrated circuit RFIC, a mixed signal IC, an application-specific integrated circuit (application-specific integrated circuit, ASIC), a printed circuit board (printed circuit board, PCB), an electronic device, and the like. The processor and the transceiver may alternatively be manufactured by using various 1C process technologies, for example, a complementary metal oxide semiconductor (complementary metal oxide semiconductor, CMOS), an n-type metal oxide semiconductor (nMetal-oxide-semiconductor, NMOS), a p-type metal oxide semiconductor (positive channel metal oxide semiconductor, PMOS), a bipolar junction transistor (Bipolar Junction Transistor, BJT), a bipolar CMOS (BiCMOS), silicon germanium (SiGe), gallium arsenide (GaAs), and the like. Optionally, the processor may include one or more processors, for example, include one or more CPUs. When the processor is one CPU, the CPU may be a single-core CPU or a multi-core CPU. The transceiver apparatus is configured to: send and receive data and/or a signal, and receive data and/or a signal. The transceiver apparatus may include a transmitter and a receiver. The transmitter is configured to send data and/or a signal, and the receiver is configured to receive data and/or a signal. The transceiver may also be a communication interface. The memory includes but is not limited to a random access memory (random access memory, RAM), a read-only memory (read-only memory, ROM), an erasable programmable read-only memory (erasable programmable read-only memory, EPROM), and a compact disc read-only memory (compact disc read-only memory, CD-ROM). The memory is configured to store related instructions and/or data.

A person skilled in the art may understand that various numbers such as "first" and "second" in this application are merely used for differentiation for ease of description, and are not used to limit the scope of the embodiments of this application. A specific value of a number (which may also be referred to as an index), a specific value of a quantity, and a position in this application are merely used as examples, but are not unique representation forms, and are not used to limit the scope of the embodiments of this application. Various numbers such as "first" and "second" in this application are merely used for differentiation for ease of description, and are not used to limit the scope of the embodiments of this application.

In this application, an element represented in a singular form is intended to represent "one or more", but does not represent "only one", unless otherwise specified. In this application, unless otherwise specified, "at least one" is intended to represent "one or more", and "a plurality of" is intended to represent "two or more".

The term "at least one of" in this specification indicates all combinations or any combination of listed items. For example, "at least one of A, B, and C" may indicate the following six cases: only A exists, only B exists, only C exists, A and B coexist, B and C coexist, and A, B, and C coexist. A may be singular or plural, B may be singular or plural, and C may be singular or plural.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. A part of or all of the units may be selected based on actual requirements to achieve the objectives of the solutions of embodiments.

In addition, functional units in the embodiments of this application may be integrated into one processing unit, each of the units may exist alone physically, or two or more units are integrated into one unit.

All or a part of the methods in the embodiments of this application may be implemented by using software, hardware, firmware, or any combination thereof. When software is used to perform quality guarantee on the embodiments, all or a part of the embodiments may be implemented in a form of a computer program product. The computer program product includes one or more computer instructions. When the computer program instructions are loaded and executed on the computer, the procedure or functions according to the embodiments of the present invention are all or partially generated. The computer may be a general-purpose computer, a special-purpose computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by the computer, or a data storage device such as a server or a data center, integrating one or more usable media. The usable medium may be a magnetic medium (for example, a floppy disk, a hard disk, or a magnetic tape), an optical medium (for example, a digital video disc (digital video disc, DVD for short)), a semiconductor medium (for example, an SSD), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A relay communication method, wherein the method comprises: receiving, by a first relay device, first indication information from first user equipment, wherein the first indication information indicates the first relay device to receive, through a first unicast connection corresponding to first security, configuration information from the first user equipment, wherein the configuration information is used for a second unicast connection for communication between the first user equipment and second user equipment through the first relay device;
receiving, by the first relay device, first configuration information from the first user equipment through the first unicast connection corresponding to the first security; and
communicating, by the first relay device, with the first user equipment based on the first configuration information through the second unicast connection.

2. The method according to claim 1, wherein
the first indication information comprises identification information of the second unicast connection.

3. The method according to claim 1 or 2, further comprising:
sending, by the first relay device, second indication information to the second user equipment, wherein the second indication information indicates the second user equipment to receive, through a third unicast connection corresponding to third security, second configuration information from the first relay device, wherein the second configuration information is used for the second unicast connection.

4. The method according to claim 3, wherein
the second indication information comprises the identification information of the second unicast connection.

5. The method according to any one of claims 1 to 4, wherein the receiving, by a first relay device, first indication information from first user equipment before or during first security establishment specifically comprises:
receiving, by the first relay device, a first unicast connection establishment request message from the first user equipment; or
receiving, by the first relay device, a first security establishment complete message from the first user equipment, wherein
the first indication information is comprised in the first unicast connection establishment request message or the first security establishment complete message.

6. The method according to any one of claims 3 to 5, wherein the sending, by the first relay device, second indication information to the second user equipment before or during third security establishment specifically comprises:
sending, by the first relay device, a third unicast connection establishment request message to the second user equipment; or
sending, by the first relay device, a third security establishment complete message to the second user equipment, wherein
the second indication information is comprised in the third unicast connection establishment request message or the third security establishment complete message.

7. A relay communication method, wherein the method comprises:
sending, by first user equipment, first indication information to a first relay device, wherein the first indication information indicates the first relay device to receive, through a first unicast connection corresponding to first security, configuration information from the first user equipment, wherein the configuration information is used for a second unicast connection for communication between the first user equipment and second user equipment through the first relay device;
sending, by the first user equipment, first configuration information to the first relay device through the first unicast connection corresponding to the first security; and
communicating, by the first user equipment, with the first relay device based on the first configuration information through the second unicast connection.

8. The method according to claim 7, wherein
the first indication information comprises identification information of the second unicast connection.

9. The method according to claim 7 or 8, further comprising:
receiving, by the second user equipment, second indication information from the first relay device, wherein the second indication information indicates the second user equipment to receive, through a third unicast connection corresponding to third security, second configuration information from the first relay device, wherein the second configuration information is used for the second unicast connection.

10. The method according to claim 9, wherein
the second indication information comprises the identification information of the second unicast connection.

11. The method according to any one of claims 7 to 10, wherein the sending, by first user equipment, first indication information to a first relay device before or during first security establishment specifically comprises:
sending, by the first user equipment, a first unicast connection establishment request message to the first relay device; or
sending, by the first user equipment, a first security establishment complete message to the first relay device, wherein
the first indication information is comprised in the first unicast connection establishment request message or the first security establishment complete message.

12. The method according to any one of claims 9 to 11, wherein the receiving, by the second user equipment, second indication information from the first relay device before or during third security establishment specifically comprises:
receiving, by the second user equipment, a third unicast connection establishment request message from the first relay device; or
receiving, by the second user equipment, a third security establishment complete message from the first relay device, wherein
the second indication information is comprised in the third unicast connection establishment request message or the third security establishment complete message.

13. A relay communication method, wherein the method comprises:
receiving, by a first relay device, a first security establishment command message from first user equipment;
sending, by the first relay device, a first security establishment complete message to the first user equipment;
receiving, by the first relay device, first configuration information from the first user equipment through a first unicast connection corresponding to first security; and
communicating, by the first relay device, with the first user equipment based on the first configuration information through a second unicast connection, wherein the second unicast connection is used for communication between the first user equipment and second user equipment through the first relay device.

14. The method according to claim 13, further comprising:
establishing, by the first relay device, third security with the second user equipment.

15. The method according to claim 14, further comprising:
sending, by the first relay device, second configuration information to the second user equipment through the third security, wherein the second configuration information is used for the second unicast connection.

16. A relay communication method, wherein the method comprises:
sending, by first user equipment, a first security establishment command message to a first relay device;
receiving, by the first user equipment, a first security establishment complete message from the first relay device;
sending, by the first user equipment, first configuration information to the first relay device through a first unicast connection corresponding to first security; and
communicating, by the first user equipment, with the first relay device based on the first configuration information through a second unicast connection, wherein the second unicast connection is used for communication between the first user equipment and second user equipment through the first relay device.

17. The method according to claim 16, further comprising:
establishing, by the second user equipment, third security with the first relay device.

18. The method according to claim 17, further comprising:
receiving, by the second user equipment, second configuration information from the first relay device through the third security, wherein the second configuration information is used for the second unicast connection.

19. A relay communication method, comprising:
receiving, by a first relay device, a third security establishment command message from second user equipment;
sending, by the first relay device, a third security establishment complete message to the second user equipment;
receiving, by the first relay device, second configuration information from the second user equipment through a first unicast connection corresponding to first security; and
communicating, by the first relay device, with the second user equipment based on the second configuration information through a second unicast connection, wherein the second unicast connection is used for communication between first user equipment and the second user equipment through the first relay device.

20. The method according to claim 19, further comprising:
establishing, by the first relay device, first security with the first user equipment.

21. The method according to claim 19 or 20, further comprising:
sending, by the first relay device, first configuration information to the first user equipment through the first security, wherein the first configuration information is used for the second unicast connection.

22. A relay communication method, comprising:
sending, by second user equipment, a third security establishment command message to a first relay device;
receiving, by the second user equipment, a third security establishment complete message from the first relay device;
sending, by the second user equipment, second configuration information to the first relay device through a first unicast connection corresponding to third security; and
communicating, by the second user equipment, with the first relay device based on the second configuration information through a second unicast connection, wherein the second unicast connection is used for communication between first user equipment and the second user equipment through the first relay device.

23. The method according to claim 22, further comprising:
establishing, by the first user equipment, first security with the first relay device.

24. The method according to claim 22 or 23, further comprising:
receiving, by the first user equipment, the first configuration information from the first relay device through the first security, wherein the first configuration information is used for the second unicast connection.

25. A communication apparatus, comprising a processor and a memory, wherein the memory is coupled to the processor, and the processor is configured to perform the method according to any one of claims 1 to 6, the method according to any one of claims 13 to 15, or the method according to any one of claims 19 to 21.

26. A communication apparatus, comprising a processor and a memory, wherein the memory is coupled to the processor, and the processor is configured to perform the method according to any one of claims 7 to 12, the method according to either of claims 16 and 17, or the method according to any one of claims 22 to 24.

27. A communication system, comprising the communication apparatus according to claim 25 or 26.

28. A computer-readable storage medium, comprising instructions, wherein when the instructions are run on a computer, the computer is enabled to perform the method according to any one of claims 1 to 24.
